# EUROPÄISCHE PATENTSCHRIFT

(11) **EP 3 317 750 B1**
(45) Veröffentlichungstag und Bekanntmachung des Hinweises auf die Patenterteilung: **30.10.2019**
(21) Anmeldenummer: 16742182.5
(22) Anmeldetag: 01.07.2016
(51) Int. Cl.: G06F 3/01, G06F 3/0362, G06F 1/16, G04C 3/00, F16D 37/02

(54) **MINICOMPUTER MIT HAPTISCHER BEDIENEINRICHTUNG MIT DREHEINHEIT UND VERFAHREN DAFÜR**
MINI-COMPUTER COMPRISING A HAPTIC OPERATING DEVICE COMPRISING A ROTATING UNIT AND METHOD THEREFOR
MINI-ORDINATEUR À DISPOSITIF DE COMMANDE HAPTIQUE MUNI D'UNE UNITÉ TOURNANTE ET PROCÉDÉ ASSOCIÉ

(30) Priorität: 01.07.2015 DE 102015110634
(43) Veröffentlichungstag der Anmeldung: 09.05.2018
(73) Patentinhaber: Inventus Engineering GmbH, 6771 St. Anton i. M. (AT)
(72) Erfinder: BATTLOGG, Stefan, 6771 St. Anton I.M. (AT)
(74) Vertreter: BSB Patentanwälte Schütte & Engelen Partnerschaft mbB
(86) Internationale Anmeldenummer: PCT/EP2016/065624
(87) Internationale Veröffentlichungsnummer: WO 2017/001697

(56) Entgegenhaltungen:
- CH-B1- 699 020
- DE-A1-102010 055 833

## Beschreibung

Die vorliegende Erfindung betrifft einen Minicomputer und ein Verfahren. Insbesondere betrifft die Erfindung eine Smartwatch oder ein Smart Device mit einem Prozessor und einer Anzeigeeinheit und einer Kommunikationseinheit und mit einer Bedieneinrichtung, wobei die Bedieneinrichtung eine drehbare Dreheinheit umfasst.

Im Stand der Technik sind Minicomputer und insbesondere handgehaltene Computer oder Smartwatches bekannt geworden, die jeweils einen Prozessor und eine Anzeigeeinheit aufweisen. Insbesondere bei Minicomputern mit einer geringen Displaygröße, wie es bei Smartwatches der Fall ist, kann die Bedienung mit dem Finger schwierig sein, da die Fingerkuppe auf dem Display einen großen Teil des Displays verdeckt. Aus der DE 10 2010 055 833 A1 ist eine Vorrichtung mit den Merkmalen des Oberbegriffs von Anspruch 1 bekannt geworden.

Deshalb sind Minicomputer bekannt geworden, bei denen ähnlich wie bei konventionellen Uhren eine Drehkrone eingesetzt wird, um durch Drehen der Krone verschiedene Menüpunkte oder Bereiche auf dem Display anzusteuern. Eine damit ausgerüstete Smartwatch ist erheblich einfacher zu bedienen, als wenn die Smartwatch nur per Gestensteuerung bedient werden kann.

In der EP 1 168 622 A2 ist in Figur 1 ein elektronisch gesteuerter Flüssigkeitsdrehknopf als haptisches Bedienelement bekannt geworden, wobei ein dünner und mit magnetorheologischem Fluid gefüllter Scherspalt zwischen einem drehfesten weichmagnetischen Jochring und einem ebenfalls drehfesten weichmagnetischen Ring vorgesehen ist. In dem Scherspalt ist ein dünnwandiges und drehbares Stellrad angeordnet. In Abhängigkeit von einem auf den Scherspalt einwirkenden Magnetfeld wirkt ein entsprechendes Bremsmoment ein. Nachteilig daran ist der extrem großflächige dünne Scherspalt, der den feststehenden äußeren weichmagnetischen Ring außen und innen umgibt, sodass die Grundreibung aufgrund des enthaltenen Fluids (magnetohorheologische Flüssigkeit = Viskosität ähnlich Honig) sehr hoch ist. Außerdem wird das Stellrad durch die Form des drehfesten weichmagnetischen Rings vorgegeben, der Teil des Magnetkreises ist. Dadurch kann das Stellrad nicht aus beliebigen Materialien gefertigt werden. In Figur 2 der EP 1 168 622 A2 ist ein anderes Ausführungsbeispiel offenbart, bei dem das Stellrad als Rückschlusseisen dient und ein drehbarer Bestandteil des Magnetkreises ist. Das Stellrad umgibt vollständig eine feststehende Anordnung aus einem Jocheisen, Spulen und mehreren Jochringen. Das Magnetfeld verläuft radial durch den Scherspalt. Nachteilig ist der ebenfalls sehr großflächige dünne Scherspalt, der praktisch so groß ist, wie die Innenoberfläche des Stellrades. Außerdem ist das Stellrad Teil des Magnetkreises und kann somit nur aus bestimmten Materialien mit geforderten magnetischen Eigenschaften gefertigt sein. Figur 3 der EP 1 168 622 A2 offenbart ein weiteres Ausführungsbeispiel mit einem Drehsteller und einem geblechten Statorteil, welches aus weichmagnetischem Material besteht, eine Ankerwicklung trägt und ein radial verlaufendes Magnetfeld in einem magnetisch wirksamen Spalt zwischen einem radial inneren und radial äußeren Statorteil erzeugt. Beide Statorteile sind miteinander verbunden und bestehen aus einem weichmagnetischen Material. Im Spalt befindet sich ein ringförmiger und nichtmagnetischer Rotor, der über eine Welle mit einem glockenförmigen Bedienkörper verbunden ist. Ferner befindet sich im Spalt eine magnetorheologische Flüssigkeit. Der Rotor weist um die Welle herum einen glockenförmigen Rotorkörper auf, dessen ringförmige Wandung in den Spalt zwischen dem radial inneren und dem radial äußeren Statorteil eingreift. Auch bei diesem Ausführungsbeispiel ist der Scherfläche zwischen dem Rotorkörper und den Statorteilen sehr groß, wodurch ein sehr hohes Grundmoment erzeugt wird. Eine Bedienung mit einem Finger ist im täglichen Betrieb nicht möglich. Deshalb eignet sich ein haptisches Bedienelement nach der EP 1 168 622 A2 nicht zum Einsatz als feinfühliges haptisches Bedienelement für einen Minicomputer oder eine Smartwatch. Die erforderlichen Bedienkräfte sind gerade für solche Anwendungsfälle viel zu groß.

Es hat sich bei Versuchen herausgestellt, dass ein haptisches Bedienelement für z. B. Infotainment in Automobilen, Drehsteller auf Smart Devicen oder als Stellglied auf Geräten (z. B.: Oszilloskop) praktisch nur dann gewerblich als Serienprodukt einsetzbar ist, wenn das Grundmoment (Leerlaufmoment bei abgeschaltetem Magnetfeld; offstate Moment..) kleiner als 0,2 Newtonmeter (Nm) ist. Das gilt für typische Drehknopfdurchmesser von 30, 40 oder 50 mm. Wird ein besonders kleiner Drehknopfdurchmesser (z. B. < 5 oder 10 mm) verwendet, ist ein merklich geringeres Grundmoment sehr vorteilhaft.

Ein Grundmoment von kleiner als 0,2 Nm ist bei einem Serienprodukt auf magnetorheologischer Basis nicht einfach realisierbar. Bremsen oder Kupplungen mit magnetorheologischem Fluid (MRF) lassen sich bei Steer by wire (großes Lenkrad bzw. großer Krafteinbringabstand) oder zum Bremsen von Vorgängen bei Maschinen einsetzen. Das Grundmoment liegt bei käuflich zu erwerbenden Produkten bei 0,4 bis 0,6 Nm, also um den Faktor 10 bis 40 über dem Stand der Technik von rein mechanischen Drehstellern. Das Maximalmoment dieser Einheiten liegt zwischen 5 und 12 Nm. Der wichtige Faktor zwischen Grundmoment und Maximalmoment (Arbeitsbereichsfaktor) liegt beim Stand der Technik somit im Bereich von 12 bis 20. Deshalb wurde bisher kein MRF Bedienknopf nach dem MRF Scherprinzip z. B. als Serienteil in Automobilen umgesetzt. Bei Smartwatches oder anderen Smartdevices ist die Sachlage ähnlich bzw. es wird wenn noch ein geringeres Grundmoment gefordert.

Es ist die Aufgabe der vorliegenden Erfindung eine verbesserte Bedienungsmöglichkeit für Minicomputer und insbesondere Smartwatches zur Verfügung zu stellen.

Diese Aufgabe wird gelöst durch einen Minicomputer mit den Merkmalen des Anspruchs 1 und durch ein Verfahren mit den Merkmalen des Anspruchs 14. Bevorzugte Weiterbildungen der erfindungsgemäßen magnetorheologischen Übertragungsvorrichtung sind Gegenstand der Unteransprüche. Weitere Vorteile und Merkmale der vorliegenden Erfindung ergeben sich aus der Beschreibung der Ausführungsbeispiele.

Ein erfindungsgemäßer Minicomputer ist insbesondere als Smartwatch oder als Smart Device ausgeführt und kann insbesondere am Handgelenk eines Benutzers getragen werden. Der Minicomputer weist wenigstens ein Prozessor und wenigstens eine Anzeigeeinheit und wenigstens eine Kommunikationseinheit auf. Weiter ist eine haptische Bedieneinrichtung vorgesehen. Die haptische Bedieneinrichtung weist insbesondere einen Grundkörper und eine drehbare Dreheinheit auf. Die haptische Bedieneinrichtung weist einen durch eine Steuereinrichtung veränderbaren Drehwiderstand auf.

Die haptische Bedieneinrichtung weist weiterhin vorzugsweise eine steuerbare Übertragungsvorrichtung auf, sodass der Drehwiderstand beim Drehen der Dreheinheit dynamisch veränderbar ist. Insbesondere weist die Übertragungsvorrichtung wenigstens zwei koppelbare Komponenten auf, deren Kopplungsintensität beeinflussbar ist. Zur Beeinflussung der Kopplungsintensität zwischen den koppelbaren Komponenten ist in einem Kanal ein durch ein Magnetfeld beeinflussbares magnetorheologisches Medium mit magnetisch polarisierbaren Partikeln angeordnet. Es ist wenigstens eine Magnetfelderzeugungseinrichtung zur Erzeugung wenigstens eines Magnetfeldes vorgesehen, um mit dem Magnetfeld das magnetorheologische Medium zu beeinflussen. Der Grundkörper ist mit einer der beiden Komponenten und die Dreheinheit ist mit der anderen der beiden Komponenten gekoppelt. Beispielsweise ist es möglich, dass die Dreheinheit an einem Gehäuse des Minicomputers drehbar aufgenommen und/oder gelagert ist. Der Grundkörper kann mit einer der beiden Komponenten und die Dreheinheit mit der anderen der beiden Komponenten direkt oder indirekt gekoppelt sein. Möglich ist z. B. eine Kopplung über ein Getriebe, eine Verzahnung oder eine Kinematik. Insbesondere ist in dem Kanal wenigstens ein drehbares Übertragungselement als Magnetfeldkonzentrator angeordnet, wobei das drehbare Übertragungselement bei einer Drehbewegung wenigstens einer der koppelbaren Komponenten in Drehung versetzt wird.

Der erfindungsgemäße Minicomputer hat viele Vorteile. Ein erheblicher Vorteil ist, dass die Bedieneinrichtung im Betrieb veränderbar ist. Dadurch kann dem Benutzer beim Drehen der haptischen Bedieneinrichtung bzw. beim Drehen der Dreheinheit in Abhängigkeit von dem aktuellen Zustand und den aktuellen Bedingungen ein angepasster Drehwiderstand eingestellt werden.

Die steuerbare Übertragungsvorrichtung kann als Bremseinheit dienen und den Drehwiderstand geeignet einstellen. Insbesondere ist die Dreheinheit gegenüber dem Grundkörper und/oder einem Gehäuse des Minicomputers drehbar.

Ein erheblicher Vorteil der Erfindung besteht darin, dass der Magnetfeldkonzentrator das Magnetfeld auf eine kleinere Fläche konzentriert. Das Übertragungselement kann z. B. als Kugel oder Walze ausgebildet sein, ohne auf diese Formen beschränkt zu sein und konzentriert das Magnetfeld, d. h. zwischen den zwei relativ zueinander bewegten Komponenten wird das Magnetfeld verändert und von einer großen Fläche auf eine kleine Fläche (eine Übergangsfläche) konzentriert. Das Verhältnis dieser Flächen ist deutlich größer als 1 und insbesondere größer als 2, größer als 5 oder insbesondere größer als 10 oder sogar 20 oder 50. Im Prinzip ist dies das Verhältnis aus der Zylinderfläche von dem Innenring in Relation zu (dem Bereich) der Tangentenkante einer Walze oder zu einem Kugelpunkt multipliziert mit einer Anzahl der Übertragungselemente, insbesondere z. B. 15.

Das Übertragungselement konzentriert das Magnetfeld und bildet einen magnetischen Feld- oder Flussdichtenkonzentrator.

Das Übertragungselement ist weder mit der ersten Komponente noch mit der zweiten Komponente drehfest verbunden. Der Feldkonzentrator kann sich "willkürlich" zwischen den beiden Komponenten bewegen.

Eine solcher erfindungsgemäßer Minicomputer hat viele Vorteile. Der Minicomputer erlaubt ein sehr kleines Grundmoment, sodass eine einfache Drehung der Dreheinheit bzw. eines an der haptischen Bedieneinrichtung ausgebildeten Drehknopfes ermöglicht wird. Eine Bedienperson kann bequem mit dem kleinen Finger das Drehteil, z. B. eine Krone einer Smartwatch, drehen. Es wird ein Grundmoment ermöglicht, welches kleiner 0,2 Nm und insbesondere kleiner 0,10 Nm und gegebenenfalls kleiner 0,07 Nm und vorzugsweise kleiner 0,05 Nm liegt, sodass im täglichen Gebrauch auch bei vielfacher Benutzung eine bequeme Bedienung ermöglicht wird. Es ist nicht nötig, das Drehteil mit zwei Fingern zu ergreifen, um das Drehteil (auch mehrmals nacheinander) zu drehen. Ein einfaches Berühren und Drehen auch mit nur einem Finger reicht in der Regel aus.

Gleichzeitig wird ein einfacher Aufbau ermöglicht und es werden nur wenig Teile verwendet. Durch den einfachen Aufbau, bei dem eine Drehmomentübertragung durch das magnetorheologische Medium oder magnetorheologische Fluid (MRF) wenigstens zu dem allergrößten Teil nur innerhalb des Kanals erfolgt, kann ein besonders geringes Grundmoment (Grundmoment = zur Drehung nötiges Moment bei abgeschalteter elektrischer Spule) bei der Bedienung des Minicomputers erreicht werden.

Ein Minicomputer mit einem Bedienelement nach der EP 1 168 622 A2 wäre nicht benutzbar, da das Grundmoment zu hoch wäre, weil sehr viel Scherfläche benutzt wird. Das Verhältnis von aktiver Fläche zu Nutzfläche (Scherfläche) ist dort sehr ungünstig. Der Scherspalt muss technologisch bedingt klein sein, was wiederum die Reibung stark erhöht (Flüssigkeitsreibung). Der mit MRF gefüllte wirksame Scherspalt ist sehr groß.

Bei der vorliegenden Erfindung weist der Kanal an dem Minicomputer eine große radiale Erstreckung (Kanalhöhe) auf, sodass die Grundreibung durch das MRF an sich bei abgeschaltetem oder geringem Magnetfeld aufgrund der großen radialen Erstreckung sehr gering ist. Die große radiale Erstreckung ergibt eine große Kanalfläche. Im Gegensatz dazu sind die Übertragungs-/Kontaktflächen aber sehr klein. Es tangieren nur Übertragungselemente (z. B. Rollen) an den bewegten und stehenden Teilen. Der Kanal ist sehr groß und hat eine niedrige Flüssigkeitsreibung.

Bei dem Aufbau nach der EP 1 168 622 A2 ist in dem sehr dünnen Spalt MRF enthalten, was aufgrund der Eisenpartikel und hohen Viskosität (ähnlich wie Schokoladensoße) wesentlich schlechtere Reibungswerte hat. Der Aufbau nach der EP 1 168 622 A2 ähnelt einem Gleitlager und der Aufbau hier einem Wälzlager. Ein Grundmoment von <0,1 Nm ist bei einem MRF-Aufbau nach dem Scherprinzip, das gewerblich als Serienprodukt einsetzbar sein soll, nicht möglich. Eine Smartwatch mit einem solchen Bedienelement ist nur schwer bedienbar.

Insbesondere umfasst der Grundkörper eine Grundplatte und ein ringförmiges Aufnahmegehäuse mit einem darin angeordneten Aufnahmeraum, wobei der Aufnahmeraum radial nach außen durch einen sich im Wesentlichen in axialer Richtung erstreckenden äußeren Schenkel des Aufnahmegehäuses begrenzt wird. Vorzugsweise ist zentral an dem Aufnahmegehäuse die Welle drehbar aufgenommen. Insbesondere ist in dem Aufnahmeraum die elektrische Spule aufgenommen. Insbesondere schließt sich in einem radial inneren Bereich an das Aufnahmegehäuse und durch einen dünnen axialen Spalt getrennt ein mit der Welle drehfest verbundener Umlaufring an. Vorzugsweise ist der Kanal in dem Aufnahmeraum angeordnet und wird radial nach außen wenigstens im Wesentlichen oder vollständig durch den äußeren Schenkel und radial nach innen wenigstens im Wesentlichen oder vollständig durch den Umlaufring begrenzt, sodass ein wesentlicher Teil des Magnetfeldes der Magnetfelderzeugungseinrichtung durch das Aufnahmegehäuse, den Kanal und den Umlaufring verläuft.

Besonders bevorzugt umfasst das Aufnahmegehäuse in dem radial inneren Bereich einen inneren Schenkel, an den sich durch den dünnen axialen Spalt getrennt der Umlaufring anschließt. Insbesondere ist ein radialer Querschnitt des Aufnahmegehäuses etwa U-förmig gestaltet. Dann ist zwischen dem inneren und dem äußeren Schenkel der Aufnahmeraum umfasst. Vorzugsweise ist der äußere Schenkel länger als der innere Schenkel ausgebildet.

Insbesondere ist in einem zentralen Durchgang an dem inneren Schenkel die Welle aufgenommen. Vorzugsweise ist in dem Aufnahmeraum zwischen dem inneren und äußeren Schenkel die elektrische Spule aufgenommen.

Der innere Schenkel ist vorzugsweise durch den dünnen axialen Spalt von dem mit der Welle verbundenen Umlaufring getrennt.

Vorzugsweise besteht der Umlaufring aus einem weichmagnetischen Material und die Welle weist eine gehärtete Oberfläche oder eine entsprechend harte Oberflächenbeschichtung auf. Dadurch können Laufspuren des Lagers zuverlässig verhindert werden und es werden geeignete und gute magnetische Eigenschaften zur Verfügung gestellt.

Eine Ausgestaltung, bei der ein radialer Querschnitt des Aufnahmegehäuses etwa U-förmig ausgebildet ist und ein umlaufender innerer Schenkel (in axialer Richtung verlaufend) und ein dazu etwa konzentrisch verlaufender umlaufender äußerer Schenkel umfasst sind und wobei sich axial an (nur durch einen dünnen Spalt getrennt) den inneren Schenkel der mit der Welle drehfest verbundene Umlaufring anschließt bietet sehr viele Vorteile. Es wird ein kompakter und kostengünstiger Aufbau ermöglicht, bei dem nur eine sehr geringe Grundreibung auftritt. Es wird ein Grundmoment kleiner und sogar deutlich 0,1 Nm ermöglicht. Damit können auch oft zu bedienende Drehknöpfe ausgerüstet werden, die nicht mit der ganzen Hand oder zwei Fingern fest gegriffen werden müssen, sondern auch Drehknöpfe, die mit einem Finger und nur einem einem sanften Druck bewegt werden können. Der Aufbau ermöglicht einen optimalen Magnetkreislauf, in dem die magnetischen Widerstände gering sind.

Vorzugsweise ist wenigstens eine Anzeigeeinheit zugeordnet.

Vorzugsweise ist die Steuereinrichtung geeignet und ausgebildet, den Drehwiderstand der Übertragungsvorrichtung bei der Dreheinheit dynamisch einzustellen. Das bedeutet, dass in Abhängigkeit von dem Drehwinkel der Drehwiderstand der Übertragungsvorrichtung einstellbar sein kann. Beispielsweise kann ein Anschlag in wenigstens einer Drehrichtung eingestellt werden, sodass der Benutzer beim Drehen der Dreheinheit und beim Erreichen eines gewissen Drehwinkels einen spürbar größeren Drehwiderstand bemerkt.

Möglich ist es, dass der Drehwiderstand in bestimmten Stufen oder kontinuierlich verändert wird. Möglich ist es auch, Endanschläge in beiden Drehrichtungen vorzusehen.

In bevorzugten Weiterbildungen ist die Steuereinrichtung dazu eingerichtet, ein haptisches Raster bei einer Drehung der Dreheinheit dynamisch zu erzeugen. Ein solches haptisches Raster weist an wenigstens einer Winkelstelle einen veränderten Drehwiderstand auf. Beispielsweise kann an einer Winkelstelle der Drehwiderstand gegenüber benachbarten Winkelstellen reduziert werden. Möglich ist es auch, dass der Drehwiderstand an einer bestimmten Winkelstelle erhöht wird, während er an benachbarten Winkelstellen relativ gesehen geringer ist.

Möglich ist es auch, dass an zwei relativ nah benachbarten Winkelstellen relative Maxima des Drehwiderstandes erzeugt werden, zwischen denen ein relatives Minimum des Drehwiderstandes angelegt wird. Dadurch kann ein fühlbares Einrasten erreicht werden.

In allen Ausgestaltungen wird vorzugsweise der zum Drehen erforderliche Drehmomentverlauf beim Drehen der Dreheinheit dynamisch verändert.

Vorzugsweise ist die Dreheinheit gegenüber der Anzeigeeinheit drehbar. Besonders bevorzugt ist die Anzeigeeinheit drehfest mit dem Grundkörper verbunden.

Möglich ist es, dass ein Sensor vorgesehen ist, der insbesondere als Winkelsensor dient und mit dem eine Winkelveränderung und insbesondere eine absolute Winkelposition zwischen der Dreheinheit und dem Grundkörper erfassbar ist. Durch einen solchen Sensor oder Winkelsensor kann jederzeit auf eine Drehbewegung der Dreheinheit reagiert werden.

Vorzugsweise ist eine Drehrichtungserkennung möglich. Vorzugsweise ist eine hohe Winkelauflösung möglich. Je feiner die Winkelauflösung ist, desto früher kann erkannt (oder gemutmaßt) werden, was der Bediener will (Drehrichtungsumkehr, feiner justieren). Dementsprechend kann die Steuerungseinrichtung (Elektronik/Software) reagieren. Ein Hallgeber (EP 1 168 622 A2) ist dazu in der Regel viel zu ungenau, da nur ein paar Hundert "counts/revolution" möglich sind. Der Sensor bzw. Winkelsensor ist vorzugsweise dazu ausgebildet, eine Winkelauflösung von 0,2° und insbesondere wenigstens 0,1° oder 0,05° oder besser zu ermöglichen. Winkelauflösungen von über 100.000 "counts/revolution" (besser als etwa 1/300 Grad) sind erstrebenswert. Mit einer Winkelauflösung besser als 0,2° oder 0,1° kann aus kleinsten Bewegungen ein Bewegungsmuster abgeleitet werden.

Bei niedrigen Sensorauflösungen kann das "Bedienelement" bzw. die Dreheinheit bzw. der Drehknopf gefühlt "kleben" bleiben (ein hohes Moment wird zum Betätigen benötigt), was sich haptisch sehr unangenehm anfühlt und damit sehr nachteilig ist. Dann muss bei z. B. einer Drehrichtungsumkehr an einem Endanschlag zunächst ein hohes Drehmoment aufgebracht werden, obwohl der Benutzer gegenläufig drehen will und somit eine Freigabe erfolgen kann. Nur muss die Steuerungseinrichtung zunächst "mitbekommen", dass in die Gegenrichtung gedreht wird, wozu das Bedienelement mindestens einen Rasterschritt bewegt werden muss. Dabei hilft eine hohe Winkelauflösung erheblich.

Besonders bevorzugt bildet der (sichtbare) Teil des Drehknopfes (sichtbarer Teil der Dreheinheit) nicht einen Teil des Magnetkreises. Besonders bevorzugt kann der sichtbare Teil des Drehknopfes nach Belieben ausgeführt werden, so kann der Drehknopf verchromt oder aus Plastik, Glas sein oder beledert werden etc., da der Drehknopf ein "Designelement" ist.

Vorzugsweise sind die Übertragungselemente bzw. Drehkörper (Laufrollen) stirnseitig abgerundet oder bombiert, damit diese axial nur eine Punktberührung mit der Grundplatte bzw. dem Deckel haben. Dadurch wird die Grundreibung und somit das Grundmoment erheblich reduziert.

Auf einen Kontaktring kann verzichtet werden.

Vorzugsweise ist die Welle magnetisch leitend, wodurch Baugröße, Gewicht und Kosten reduziert werden. Vorzugsweise besteht die Welle aus einem niederlegierten Stahl wie z. B. S235. Damit die darauf laufende Dichtung wenig Reibung produziert und die Welle nicht beschädigt (Laufrille), ist die Welle vorzugsweise hartverchromt.

Der Umlaufring besteht vorzugsweise aus magnetisch gut leitendem bzw. weichmagnetischem Stahl und ist mit der Welle drehfest verbunden, insbesondere verpresst.

Der Bedienkopf bzw. die Dreheinheit ist vorzugsweise über ein Momentenübertragungselement wie z. B. einen Vierkant mit Schlitz mit der Welle verbunden. Der Bedienkopf bzw. die Dreheinheit wird durch das Momentenübertragungselement (z. B. Verschraubung über eine Senkkopfschraube) spielfrei verspannt.

Es ist möglich, dass durch Drehbewegung der Dreheinheit der Minicomputer aus einem Stand-by-Modus oder einem Ruhemodus aktiviert wird und in einem Betriebsmodus übergeht und umgekehrt.

Vorzugsweise ist die Steuereinrichtung dazu geeignet und ausgebildet, die Magnetfelderzeugungseinrichtung dynamisch zu steuern und das Magnetfeld der Magnetfelderzeugungseinrichtung oder eine entsprechende Kraft dynamisch in Abhängigkeit von einem Drehwinkel zu erzeugen, um ein dynamisches und winkelabhängiges haptisches Raster zur Verfügung zu stellen.

In fortlaufenden Weiterbildungen ist wenigstens ein separater Kontaktring oder ein separates Kontaktelement zwischen den beiden Komponenten angeordnet, wobei der Kontaktring bzw. das Kontaktelement elastisch ausgebildet ist bzw. sind. Ein solcher Kontaktring kann einen runden, eckigen, ovalen oder sonstigen Querschnitt aufweisen.

Vorzugsweise ist zwischen den beiden Komponenten ein Kanal ausgebildet und insbesondere ist in dem Kanal wenigstens eine Mehrzahl an Drehkörpern vorgesehen.

Der Grundkörper umfasst insbesondere eine Grundplatte und ein Aufnahmegehäuse. An dem Aufnahmegehäuse kann eine Welle drehbar aufgenommen sein. Insbesondere ist ein magnetorheologisches Medium zwischen dem Grundkörper und der Welle aufgenommen. Das Aufnahmegehäuse kann das Gehäuse des Minicomputers sein.

In allen Ausgestaltungen kann zwischen der Dreheinheit und dem Grundkörper ein Spalt oder ein Kanal vorgesehen sein, der insbesondere mit einem magnetorheologischen Medium und insbesondere einem magnetorheologischen Fluid wenigstens teilweise gefüllt ist. Durch ein steuerbares Magnetfeld, welches auf den Kanal einwirkt, kann eine Kupplungsintensität zwischen der Dreheinheit und dem Grundkörper beeinflusst werden, sodass durch ein gezieltes zeitliches Erzeugen und/oder Abschalten des Magnetfeldes eine Kopplungsintensität und somit der Drehwiderstand beim Drehen der Dreheinheit variierbar ist.

Beispielsweise kann bei einer Veränderung eines Drehwiderstandes bzw. erforderlichen Drehmoments zum Drehen der Dreheinheit von 0,02 Newtonmeter auf 0,04 Newtonmeter ein deutlicher haptischer Unterschied gespürt werden.

In bevorzugten Weiterbildungen ist die Dreheinheit mit der Welle drehfest verbunden. Die Welle ist insbesondere an einem Ende an der Grundplatte drehbar abgestützt. Der Grundkörper kann benachbart zu der Grundplatte jeweils eine umlaufende Lauffläche für die Drehkörper aufweisen. Wenigstens eine Lauffläche weist insbesondere wenigstens eine umlaufende Nut für die Drehkörper auf. Die Lauffläche der Welle kann an einem vergrößerten Umlaufring ausgebildet sein und einen vergrößerten Durchmesser aufweisen. Insbesondere ist der Umlaufring an einer Stirnfläche durch einen Spalt von einer Stirnfläche des Aufnahmegehäuses getrennt. In dem Spalt ist vorzugsweise ein freier axialer Abstand erheblich geringer als ein freier radialer Abstand an dem Kanal zwischen der Dreheinheit und dem Grundkörper.

Vorzugsweise ist in dem Aufnahmegehäuse ein Aufnahmeraum ausgebildet, der zum Beispiel ringförmig ausgebildet sein kann. In dem Aufnahmeraum ist eine elektrische Spule vorzugsweise angeordnet. Die elektrische Spule ist insbesondere im Wesentlichen axial benachbart zu den Drehkörpern angeordnet.

Es ist bevorzugt, dass das Aufnahmegehäuse und der Umlaufring aus einem besser magnetisch leitenden Material bestehen als die Grundplatte.

Insbesondere sind die beiden Komponenten der Übertragungsvorrichtung wahlweise und gesteuert miteinander koppelbar.

Unter dem Begriff Kopplungsintensität werden im Sinne dieser Anmeldung die Kopplungskraft und/oder das Kopplungsmoment zwischen den beiden Komponenten verstanden. Wird z. B. eine lineare Kraftübertragung gewünscht, so entspricht die Kopplungsintensität der Kopplungskraft. Wenn ein Drehmoment übertragen werden soll, wird mit der Kopplungsintensität das Kopplungsmoment gemeint.

Vorzugsweise ist durch das Feld die Viskosität des magnetorheologischen Mediums veränderbar, wodurch die notwendige Verdrängungsarbeit zur Relativbewegung der relativ zueinander bewegbaren Komponenten und/oder Drehkörper beeinflussbar ist.

Unter Verdrängungsarbeit wird auch die Verdrängungskraft verstanden, die zur Verdrängung des Mediums bei einer Relativbewegung nötig ist.

Ein erheblicher und überraschender Vorteil der eingesetzten magnetorheologischen Übertragungsvorrichtung resultiert aus der erheblich verstärkten Wirkung des Magnetfeldes der Magnetfelderzeugungseinrichtung in dem Kanal. Der spitzwinklige und das Medium enthaltende Bereich wirkt als Hebel und somit quasi wie eine starke mechanische Hebelübersetzung, wobei der Hebel die Wirkung des Magnetfeldes um ein Mehrfaches erheblich verstärkt. Dadurch kann entweder die Feldstärke der Magnetfelderzeugungseinrichtung bei gleichbleibender Wirkung reduziert werden oder aber der Effekt des Magnetfeldes wird bei gleichbleibender Feldstärke verstärkt oder es wird sogar die Wirkung bei reduzierter Feldstärke deutlich erhöht. Durch den spitzwinkligen und das Medium enthaltenden Bereich wird die Wirkung insbesondere um ein Mehrfaches erhöht, wenn das Magnetfeld auf das Medium einwirkt. Insbesondere wirkt das Magnetfeld wenigstens zeitweise auf den spitzwinkligen und das magnetorheologische Medium enthaltenden bzw. sich bildenden Bereich ein.

Dadurch, dass der Drehkörper mit einem erheblichen freien Abstand gegenüber der wenigstens einen Komponente angeordnet ist, kann ein makroskopischer Keil entstehen, der zur Übertragung starker Kupplungs- oder Bremsmomente dienen kann. Durch die völlig überraschende Vervielfachung der Wirkung kann erheblich Bauvolumen eingespart werden. Der ausgenutzte Effekt beruht auf der Keilbildung (Haufenbildung) und nicht nur dem magnetorheologischen Verketten einzelner Partikel. Die typische Reaktionszeit zur Keilbildung benötigt etliche Millisekunden, während das Verketten einzelner Partikel gemäß dem MRF-Effekt schon innerhalb ca. 1 Millisekunde erfolgt. Diese mehrfach längere Zeitdauer ist der Keilbildung geschuldet. Eine solche erhebliche Verstärkung der Wirkung war nicht erwartet worden. Die längere Reaktionszeit von z. B. 5, 10 oder 20 Millisekunden ist in vielen Anwendungsfällen mehr als ausreichend.

Der Kanal kann auch ein Zwischenraum oder ein nach 4 Seiten offener Raum sein.

Als spitzwinkliger Bereich des Kanals wird jener Kanalbereich definiert, der durch die Form von Drehkörper und Komponenten in wenigstens einem Querschnitt annähernd spitzwinklig aussieht. Die Seiten des Bereichs müssen nicht gerade sein, sie können auch gekrümmt sein und/oder eine andere Kontur aufweisen. Dabei definiert der spitzwinklige Bereich jenen Teil des Kanals, in dem Drehkörper und Komponenten insbesondere den kleinsten Abstand zueinander haben bzw. sich berühren sowie den angrenzenden Bereich, in dem sich die Oberflächen von Drehkörper und Komponenten voneinander entfernen.

Unter der Wirkung eines Magnetfeldes bildet sich der spitzwinklige und das magnetorheologische Medium enthaltende Bereich aus, in dem eine erheblich erhöhte Viskosität vorliegt.

Es ist ein gutes Drehmoment zu Gewichts-Verhältnis möglich, welches größer als 100 Nm/kg sein kann.

Vorzugsweise wird ein Drehkörper durch eine Relativgeschwindigkeit zu wenigstens einer Komponente in eine Drehbewegung versetzt. Dabei ist es möglich, dass die Umfangsgeschwindigkeit des Drehkörpers gleich der Relativgeschwindigkeit zu der Komponente ist. Es ist aber auch möglich, dass die Umfangsgeschwindigkeit des Drehkörpers auf seiner äußeren Oberfläche größer oder kleiner als die Relativgeschwindigkeit ist. Insbesondere ist es möglich, dass die Umfangsgeschwindigkeit des Drehkörpers auf seiner äußeren Oberfläche geringer ist als die Relativgeschwindigkeit des Drehkörpers zu der Komponente.

Der Drehkörper kann im Wesentlichen rotationssymmetrisch um wenigstens eine Drehachse ausgebildet sein. Ebenso ist es möglich, dass der Drehkörper zu mehreren Drehachsen rotationssymmetrisch ausgebildet ist. Beispielsweise kann der Drehkörper als Kugel oder Ellipsoid ausgebildet sein. Möglich ist es auch, dass der Drehkörper als Zylinder, Rolle oder allgemein als Rollkörper ausgestaltet ist. Insbesondere eine etwa zylindrische Ausgestaltung hat sich als vorteilhaft erwiesen, da sich beispielsweise bei einem zylindrischen Drehkörper über die gesamte Breite des Drehkörpers der spitzwinklige und das Medium enthaltende Bereich ausbildet, der so im Wesentlichen keilförmig ausgestaltet ist. Bei diesen und anderen Ausgestaltungen weist der spitzwinklige Bereich eine Keilform auf.

Es ist aber nicht nötig, dass der Drehkörper rotationssymmetrisch ausgebildet ist. Auch Drehkörper mit elliptischen oder eiförmigen Querschnitten oder Drehkörper mit Einbuchtungen wie Golfbälle oder mit regelmäßigen oder unregelmäßigen Ein- und/oder Ausbuchtungen können vorteilhaft verwendet werden. Die Oberfläche der Drehkörper kann glatt ausgestaltet sein, muss es aber nicht. Da die Drehkörper nicht zur Lagerung und Abstützung der Komponenten gegeneinander verwendet werden, ist eine symmetrische und/oder glatte Oberfläche nicht notwendig. Vorteilhaft können sogar Drehkörper mit rauer und/oder unregelmäßiger Oberfläche sein, da der Keileffekt verstärkt wird. Ein erhöhter Verschleiß tritt nicht auf, da die Drehkörper nicht zur Lagerung und Übertragung von Tragkräften eingesetzt werden.

Die Verstärkung der Wirkung erfolgt vorzugsweise nicht nur durch eine Verstärkung oder Bündelung des Magnetfeldes, sondern vor allem auch durch die vor den Drehkörpern oder Rollen angehäuften Partikel und deren Verdichtung. Wegen des Magnetfeldes können die Partikel nicht weg und verdichten so schneller zu einem Keil. Der Keil ist von außen einfach per Schalter steuerbar. Der Vorteil bei magnetorheologischen Fluiden wie MRF ist, dass durch das Aufheben des Magnetfeldes sich der Keil wieder lösen kann. Mit dem Magnetfeld kann - ohne mechanische Bewegung oder Krafteinleitung - der Keil beeinflusst werden. Zur gezielten Beeinflussung und sicheren Steuerung hat es sich als vorteilhaft herausgestellt, dass der freie Abstand zwischen dem Drehkörper und der Komponente größer als ein mehrfaches des Partikeldurchmessers ist.

Der Durchmesser der Partikel des magnetorheologischen Mediums beträgt insbesondere zwischen 1 µm und 10 µm. Der typische mittlere Durchmesser der Partikel des magnetorheologischen Mediums ist der arithmetisch gemittelte Durchmesser der Partikel, die größer sind als das kleinste Prozent und die kleiner sind als das größte Prozent. In der Regel entspricht dieser Wert dem Mittelwert der Durchmesser des größten und des kleinsten Partikels, im gewählten Beispiel also 5,5 µm. Wenn aber beispielsweise eine sehr geringe Zahl noch kleinerer Partikel vorhanden ist, ändert das nichts an dem so bestimmten typischen mittleren Durchmesser. Das gleiche gilt, wenn z. B. einzelne Partikel mit 10,5 µm oder 11 µm Durchmesser enthalten sein sollten.

Vorzugsweise beträgt der freie Abstand zwischen dem Drehkörper und der Komponente mehr als 30 µm und insbesondere weniger als 300 µm. Der typische mittlere Durchmesser der Partikel liegt vorzugsweise zwischen 3 µm und 7 µm. Vorzugsweise beträgt der freie Abstand zwischen dem Drehkörper und der Komponente mehr als 70 µm und insbesondere weniger als 250 µm.

Vorteilhafterweise verkeilt der spitzwinklige Bereich bei Anlage eines Magnetfeldes die zwei sich ohne Magnetfeld frei zueinander bewegbaren Komponenten. Ein mechanischer Keil in Form eines separaten festen Teils ist dafür nicht erforderlich.

Vorzugsweise ist der spitzwinklige Bereich zwischen dem Köper und einer Komponente so vorgesehen, dass sich der spitzwinklige Bereich in Richtung der Relativbewegung der Komponente relativ zu dem Drehkörper verjüngt. Wälzt ein zylindrischer Drehkörper auf einer flachen Oberfläche einer Komponente ab, so bildet sich der spitzwinklige Bereich in Keilform vor dem Drehkörper. Durch die Verkettung der Partikel in dem Medium entsteht ein sich insgesamt verkettender Keil, der die Relativbewegung des Drehkörpers zu der Komponente hemmt.

Besonders bevorzugt ist der und insbesondere jeder Drehkörper als separates Teil zwischen der ersten und der zweiten Komponente ausgebildet. Dann ist es bevorzugt, dass die eine Komponente als äußere Komponente die andere Komponente als innere Komponente umgibt. Beispielsweise kann eine (Antriebs-) Welle als innere Komponente vorgesehen sein. Die andere bzw. äußere Komponente kann beispielsweise zum Bremsen dienen und die Welle radial umgeben. Zwischen der Welle und der äußeren Komponente können die Drehkörper vorgesehen sein. Es hat sich herausgestellt, dass zur Erzielung des Keileffektes sich um ihre eigene Achse drehende Drehkörper erheblich besser sind. Ausgearbeitete Lagerschalen sind nicht nötig. Die Übertragung eines Kupplungs- oder Bremsmomentes funktioniert unabhängig von der Qualität der Abrollflächen.

Zur Lagerung der beiden Komponenten kann wenigstens ein separates Lager oder Wälzlager vorgesehen. Die Drehkörper sorgen mit dem Keileffekt für die Übertragung der gewünschten Drehmomente, während das oder die Wälzlager zur definierten Führung und Abstützung der beiden Komponenten und dem gleichbleibenden Laufspalt sorgen.

In allen Ausgestaltungen ist vorzugsweise der freie Abstand mindestens doppelt, fünfmal und insbesondere zehnmal so groß ist wie der größte typische Partikeldurchmesser. In bestimmten Ausgestaltungen hat sich ein freier Abstand zwischen etwa dem fünffachen und insbesondere dem zehnfachen und dem zwanzigfachen größten typischen Partikeldurchmesser als vorteilhaft herausgestellt. Bei größeren freien Abständen wird das maximal übertragbare Drehmoment wieder reduziert, da der Keileffekt nachlässt. Bei zu geringen freien Abständen kann es auch ohne Magnetfeld zu einer Blockade kommen. Außerdem kann dann nicht immer ein Lösen des Keils nach dem Abschalten des Magnetfeldes gewährleistet werden.

Unter dem mittleren Partikeldurchmesser wird das arithmetische Mittel aus minimalem und maximalem Partikeldurchmesser verstanden. Die meisten MRF weisen magnetisch polarisierbare Partikel auf, die eine Größenverteilung zwischen etwa 1 µm und 10 µm aufweisen. Der mittlere Partikeldurchmesser ist bei diesem Beispiel 5,5 µm. Bei variablen Größenverteilungen wird unter dem größten typischen Partikeldurchmesser ein Partikeldurchmesser verstanden, den nur weniger als 1% der Partikel überschreiten. Der größte typische Partikeldurchmesser ist im genannten Beispiel etwas geringer als 10 µm, sodass hier von 10 µm als größtem typischen Partikeldurchmesser ausgegangen werden kann.

Vorzugsweise ist der freie Abstand größer als 1/500 und vorzugsweise größer als 1/250 und insbesondere größer als ein 1/100 und besonders bevorzugt größer als 1/50 eines Durchmessers wenigstens eines Drehkörpers und insbesondere ist der freie Abstand kleiner als 1/10 und insbesondere kleiner als 1/20 des Durchmessers des Drehkörpers.

Der freie Abstand ist vorzugsweise größer als 1/300 des Außendurchmessers der inneren Komponente und/oder größer als 1/500 des Innendurchmessers der äußeren Komponente. Vorzugsweise ist der freie Abstand größer als 30 µm und insbesondere kleiner als 200µm.

Bei allen Zahlenangaben sind vorzugsweise Variationen um +/- 20% möglich. Unter einem Partikel wird im Folgenden ein magnetisch polarisierbarer Partikel verstanden.

Werden übergroße Drehkörper und/oder Wellendurchmesser verwendet, können andere Abstände vorteilhaft sein. Ein Vorteil dieser magnetorheologischen Übertragungsvorrichtung mit wenigstens zwei koppelbaren Komponenten ist, dass die Keilbildung fertigungstolerant ist, d. h. z. B. fertigungs- und montagebedingte Unterschiede in Spalthöhen, Oberflächen, Abmessungen wie auch Wärmeausdehnungen oder lastbedingte Verschiebungen von Komponenten haben einen untergeordneten Einfluss auf diesen und verursachen vernachlässigbare Momenten- oder Kraftunterschiede.

Eine z. B. konstruktiv bedingte Änderung vom Spalt innerhalb gewisser Systemgrenzen kann auch z. B. durch Sensoren erkannt und durch Feldanpassung ausgeregelt werden.

In bevorzugten Ausgestaltungen ist der Drehkörper Teil der ersten oder der zweiten Komponente. Das bedeutet, dass der beispielsweise als Drehkörper ausgebildete Drehkörper Teil der ersten Komponente ist und auf der zweiten Komponente beispielsweise abrollt. Der Drehkörper kann aber auch ohne mechanische Verbindung zu beiden Komponenten sein.

In dem spitzwinkligen und zum Beispiel keilförmigen Bereich verketten sich bei Anlage eines äußeren Magnetfeldes die ferromagnetischen Partikel in dem Medium und führen zu einem örtlich festeren Gebilde, welches sich der weiteren Relativbewegung zwischen dem Drehkörper und der benachbarten Komponente widersetzt. Durch die Wälzbewegung des Drehkörpers können die Partikel im keilförmigen Teil in Bewegungsrichtung vor dem Drehkörper zusätzlich verdichtet werden. Diese Verdichtung kann aber je nach Gestaltung des Drehkörpers auch durch Nick-, Kipp- oder sonstige Bewegungen relativ zu einer Komponente erfolgen.

Rollt der Drehkörper beispielsweise auf der Oberfläche einer Komponente ab und bildet sich vor dem Drehkörper ein solcher spitzwinkliger Bereich aus, so werden durch die Drehbewegung des Drehkörpers von der äußeren Oberfläche Partikel in dem Medium mitgerissen und in Drehbewegung versetzt, wobei sich aber der sich verhärtende spitzwinklige Bereich einer solchen Drehbewegung stark widersetzt. Der spitzwinklige Bereich in Keilform führt zu einer Kraft auf den Drehkörper weg von der Komponente. Gegebenenfalls kann eine solche Kraft und eine daraus resultierende Bewegung auch für Feinjustagezwecke verwendet werden. Vorzugsweise kann durch den spitzwinkligen Bereich in Keilform eine rotative Bewegung in eine axiale Verschiebung des Drehkörpers umgewandelt werden, wenn das Magnetfeld aktiviert wird. Dadurch wird quasi ein Aufschwimmen des Drehkörpers durch die Partikel bewirkt. Es ist auch möglich den Drehkörper oder eine Komponente beispielsweise mit gewindeförmigen Einkerbungen zu versehen oder relativ zueinander schräg zu lagern, um die Wirkrichtung der resultierenden Kraft zu verändern oder die erreichbare Kraftübersetzung weiter zu erhöhen. Dadurch kann mit einer Art Gewindestange eine lineare Bewegung in eine Rotationsbewegung überführt werden. Durch Anlage eines Feldes wird die Relativbewegung gehemmt.

Es ist ebenso bevorzugt, dass der Drehkörper als separates Teil zwischen der ersten und der zweiten Komponente ausgebildet ist. Eine solche Ausgestaltung kann besonders vorteilhaft sein, da es zu zwei spitzwinkligen Bereichen bzw. keilförmigen Bereichen zwischen dem Drehkörper und den beiden Komponenten kommen kann. Liegt der Drehkörper auf der einen Seite praktisch an der ersten Komponente und an der anderen Seite praktisch an der zweiten Komponente an, so bilden sich auf beiden Seiten spitzwinklige Bereiche, die dem Magnetfeld der Magnetfelderzeugungseinrichtung ausgesetzt werden. Dadurch wird die Wirkung erhöht. Dazu ist es nicht nötig, dass der Drehkörper vollständig an der ersten Komponente oder der zweiten Komponente anliegt. Dabei verbleibt zwischen dem Drehkörper und der jeweiligen Komponente ein geringer Spalt. Die Größe des Spaltes hängt unter anderem von den Eigenschaften des Mediums ab. Insbesondere kann die Größe des Spaltes wenigstens dem fünffachen und vorzugsweise wenigstens dem zehnfachen oder zwanzigfachen eines typischen oder mittleren Partikeldurchmessers entsprechen.

Die ferromagnetischen Partikel bestehen insbesondere aus Carbonyleisenpulver. Das Fluid kann z. B. ein Öl sein.

Möglich ist es auch, dass magnetorheologische und elektrorheologische Medien gemeinsam eingesetzt werden. Denkbar ist auch der Einsatz anderer Medien, die durch entsprechende Felder beeinflusst und beispielsweise verkettet werden. Ebenso möglich ist der Einsatz von Medien, welche ihre rheologischen Eigenschaften in Abhängigkeit von sonstigen physikalischen Größen wie beispielsweise Temperatur oder Schergeschwindigkeit verändern.

Der Kanal kann vollständig oder auch nur teilweise mit dem Medium gefüllt sein. Vorzugsweise ist zumindest der spitzwinklige Bereich des Kanals mit dem Medium gefüllt.

In allen Ausgestaltungen kann die erste und/oder zweite Komponente rotationssymmetrisch ausgebildet sein. Beispielsweise können die Komponenten jeweils als Scheiben oder zylindrische Körper ausgebildet sein, zwischen denen Drehkörper vorgesehen sind, um durch den Keileffekt die Wirkung des Magnetfeldes der Magnetfelderzeugungseinrichtung entsprechend zu erhöhen.

In allen Ausgestaltungen ist es bevorzugt, dass das Magnetfeld durch den Drehkörper und insbesondere im Wesentlichen quer zu der Relativbewegung der Komponenten zueinander und von einer Komponente zu der anderen Komponente wenigstens teilweise durch den Drehkörper verläuft. Eine solche Ausgestaltung hat sich als besonders wirkungsvoll herausgestellt, da die Wirkung des Magnetfeldes an den Übergangspunkten von dem Drehkörper auf die Wände des Kanals besonders stark ist. Abhängig vom wirkenden Magnetfeld ist es deshalb vorteilhaft, wenn der Drehkörper zumindest teilweise magnetisch leitfähig ist. Insbesondere ist wenigstens eine und insbesondere sind beide Komponenten und/oder der wenigstens eine Drehkörper zumindest teilweise aus einem ferromagnetischen Material. Die Permeabilitätszahl ist vorzugsweise größer als 500. Die auch relative Permeabilität genannte Permeabilitätszahl des Materials kann auch 1000, 2000 oder mehr betragen. Möglich sind beispielsweise Drehkörper aus einem ferromagnetischen Stahl, wie ST37.

Durch ein gedämpftes magnetisches Wechselfeld kann eine Entmagnetisierung des Materials erfolgen, damit ohne Restfeld ein niederes Grundmoment erreicht wird.

In allen Ausgestaltungen ist es bevorzugt, dass die Magnetfelderzeugungseinrichtung wenigstens einen Dauermagneten und/oder wenigstens eine Spule umfasst. Möglich ist auch der Einsatz eines oder mehrerer Dauermagneten und einer oder mehrerer elektrischer Spulen.

Möglich und bevorzugt ist es, die Magnetisierung des Dauermagneten durch wenigstens einen magnetischen Impuls einer elektrischen Spule dauerhaft zu verändern. Bei einer solchen Ausgestaltung wird der Dauermagnet durch magnetische Impulse der Spule so beeinflusst, dass die Feldstärke des Dauermagneten dauerhaft verändert wird. Dabei kann die dauerhafte Magnetisierung des Dauermagneten durch den magnetischen Impuls der Magnetfelderzeugungseinrichtung auf einen beliebigen Wert zwischen null und der Remanenz des Dauermagneten eingestellt werden. Auch die Polarität der Magnetisierung ist veränderbar. Ein magnetischer Impuls zur Einstellung einer Magnetisierung des Dauermagneten ist insbesondere kürzer als 1 Minute und vorzugsweise kürzer als 1 Sekunde und besonders bevorzugt beträgt die Länge des Impulses weniger als 10 Millisekunden.

Als Effekt eines Impulses bleibt die Form und Stärke des Magnetfeldes in dem Dauermagneten dauerhaft erhalten. Die Stärke und Form des Magnetfeldes kann durch zumindest einen magnetischen Puls der Magnetfelderzeugungseinrichtung geändert werden. Durch ein gedämpftes magnetisches Wechselfeld kann eine Entmagnetisierung des Dauermagneten erfolgen.

Als Material für solch einen Dauermagneten mit veränderbarer Magnetisierung eignet sich beispielsweise AlNiCo, es können aber auch andere Materialien mit vergleichbaren magnetischen Eigenschaften eingesetzt werden. Es ist zudem möglich, anstelle eines Dauermagneten den gesamten magnetischen Kreis bzw. Teile von ihm aus einer Stahllegierung mit starkem Restmagnetismus (hoher Remanenz) herzustellen.

Möglich ist es, mit dem Dauermagneten ein dauerhaftes statisches Magnetfeld zu erzeugen, welches durch ein dynamisches Magnetfeld der Spule überlagert werden kann, um die gewünschte Feldstärke einzustellen. Dabei kann durch das Magnetfeld der Spule der aktuelle Wert der Feldstärke beliebig verändert werden. Möglich ist auch der Einsatz zweier getrennt ansteuerbarer Spulen.

In allen Ausgestaltungen ist es bevorzugt, wenigstens eine Steuereinrichtung vorzusehen. Möglich ist auch der Einsatz eines Energiespeichers wie beispielsweise eines Kondensators zur Speicherung zumindest eines Anteils der benötigten Energie. Wenigstens ein Sensor oder mehrere Sensoren können zur Detektion relevanter Daten wie beispielsweise der Relativgeschwindigkeit der Komponenten zueinander oder der vorherrschenden Feldstärke und dergleichen dienen. Möglich ist es auch, als Sensor einen Temperatursensor einzusetzen, der z. B. bei Überschreiten vorbestimmter Temperaturbedingungen einen Alarm auslöst. Es kann vorteilhaft ein Drehwinkelgeber eingesetzt werden, um jederzeit Daten über die Winkelposition der Komponenten zueinander zu haben. In allen Ausgestaltungen ist es bevorzugt, dass der Dauermagnet zumindest teilweise aus einem hartmagnetischen Material besteht, dessen Koerzitivfeldstärke größer als 1kA/m und insbesondere größer als 5kA/m und vorzugsweise größer als 10kA/m ist.

Der Dauermagnet kann zumindest teilweise aus einem Material bestehen, welches eine Koerzitivfeldstärke kleiner als 1000 kA/m und vorzugsweise kleiner als 500 kA/m und besonders bevorzugt kleiner als 100 kA/m aufweist.

Die magnetorheologische Übertragungsvorrichtung ist Teil einer Bedieneinrichtung, die insbesondere einen Bedien- oder Steuerknopf oder dergleichen umfasst.

Der Drehkörper und wenigstens eine Komponente können sich an zumindest einem Punkt oder zumindest einer Linie berühren. Es ist möglich und bevorzugt, dass der Drehkörper relativ zu zumindest einer Komponente in Ruhe ist.

Vorzugsweise kann sich der Drehkörper relativ zu zumindest einer Komponente, beispielsweise in Form einer Dreh- oder Kippbewegung, bewegen.

Die Feldstärke kann abhängig von dem jeweiligen Abstand zwischen Drehkörper und Komponenten einen starken Gradienten aufweisen.

Die Feldstärke erhöht sich vorzugsweise im spitzwinkligen Bereich zwischen Drehkörper und Komponenten zum Bereich mit dem geringsten Abstand hin.

Der Wartungsbedarf ist gering, da wenige und einfache Bauteile eingesetzt werden. Gegebenenfalls kann die Wartung durch einfachen Austausch der magnetorheologischen Flüssigkeit durchgeführt werden. Der Aufbau ist einfach und robust und es werden keine Stromdurchführungen benötigt. Außerdem ist der Energiebedarf geringer als beim Stand der Technik, denn der Keileffekt trägt erheblich zur Beeinflussung der Relativbewegung der Komponenten bei. Es ist möglich, ein Drehmoment/Gewichts-Verhältnis von >100 Nm/kg zu erreichen.

Bei magnetorheologischen Kupplungen bzw. Bremsen ohne Keileffekt bewegen sich die Magnetfeldpole relativ zueinander und erzeugen in der dazwischenliegenden MR Flüssigkeit Scherkräfte (Direct Shear Mode). Die Scherkräfte variieren je nach Magnetfeld. Kein Magnetfeld bedeutet keine bzw. geringe Scherkräfte (keine Kettenbildung im MRF), maximales Magnetfeld bedeutet maximale Scherkräfte und damit maximale Bremskraft bzw. Bremsmoment. Vereinfacht gesagt sind Magnetfeld und Scherkräfte proportional.

Bei der vorliegenden Erfindung kann durch entsprechende Gestaltung der Einzelkomponenten, Dimensionierung und Feldeinbringung ein davon abweichendes und sehr vorteilhaftes Verhalten geschaffen werden. Dieses vorteilhafte Verhalten äußert sich dahingehend, dass zum Halten der spitzwinkligen Ausbildung bzw. des MR-Fluid Keils ein wesentlich geringeres Magnetfeld und damit eine geringere Stromstärke als zum erstmaligen Erzeugen des Keils benötigt wird. Dies kommt daher, dass die Partikelanhäufung, ist sie erstmals angehäuft und durch die dieser Erfindung zugrundeliegenden speziellen Bewegungen unter Einfluss eines richtig eingebrachten Magnetfeldes quasi mechanisch verdichtet, nicht mehr so leicht zerfällt. Dies hat zur Folge, dass ---z. B. nach einer entsprechenden Zeit zum Erreichen dieses Zustandes ein Bremsmoment mit dem Bruchteil des Magnetfeldes bzw. an elektrischer Leistung (Spulenstrom) gehalten werden kann, was energietechnisch vorteilhaft ist.

Werden Kupplungen mit magnetorheologischen Flüssigkeiten nach dem Stand der Technik über das maximal übertragbare Kupplungsmoment hinaus beansprucht, beginnen einzelne Partikelketten abzureißen, wodurch sich ein Schlupf bzw. ein Durchrutschen einstellt. Das maximale Kupplungsmoment bleibt aber erhalten, es nimmt mitunter sogar leicht zu, die Kupplung löst sich nicht. Je nach Anwendung kann dies unerwünscht sein, so ---z. B., wenn sich ein Bohrmaschinenbohrer beim Bohren verklemmt.

Bei der vorliegenden Erfindung kann durch entsprechende Gestaltung der Einzelkomponenten, Dimensionierung und Feldeinbringung ein davon abweichendes und sehr vorteilhaftes Verhalten geschaffen werden. Dieses vorteilhafte Verhalten äußert sich dahingehend, dass beim Überschreiten einer maximalen Kraft zwischen den sich bewegenden Teilen der vom Magnetfeld erzeugte Keil (Materialanhäufung) schlagartig durch den Spalt gepresst wird (Material verdrängt) und die Kraft damit eingehend schlagartig abnimmt. Aufgrund der daraus resultierenden Relativbewegung und der hohen anliegenden Kraft bildet sich kein neuer Keil, wodurch die Relativkraft niedrig bleibt. Bei Überlastkupplungen ist dieses Verhalten sehr vorteilhaft. Über das Magnetfeld kann die maximale Kraft (Auslösekraft) bzw. das maximale Moment (Auslösemoment) voreingestellt werden.

Weiterhin werden Entmischungs-, Sedimentations- und Fliehkraftprobleme zuverlässig vermieden, da durch die rotierenden Drehkörper eine ständige Vermischung der Partikel in dem Medium erzielt wird.

Aufgrund der erheblich höheren übertragbaren Momente und Kräfte können Kupplungen, Bremsen oder dergleichen mit wesentlich kleineren Durchmessern realisiert werden. Aufgrund der geringen MRF Kanalhöhe und der Drehbewegung der Drehkörper ist ein Entmischen bei der vorliegenden Erfindung praktisch nicht relevant.

Die Erfindung kann vielfältig eingesetzt werden. Der Einsatz ist ebenso an Fahrzeugen oder an Werkzeugmaschinen oder Haushaltsgeräten möglich.

Auch bei einer dreidimensionalen Bewegung kann die Erfindung eingesetzt werden. So kann die Rotation und Pendelbewegung durch den MRF Keil beschränkt bzw. blockiert werden. Das wirkende Moment ist stufenlos einstellbar und es können Schaltzeiten im Bereich einiger Millisekunden erzielt werden. Der Aufbau ist einfach und es sind keine mechanisch bewegten Teile zum Variieren des Drehmoments nötig. Ein weiterer Vorteil ist, dass ein fast geräuschloser Betrieb möglich ist. Die Mehrkosten sind gering und eine erfindungsgemäße magnetorheologische Übertragungsvorrichtung kann betriebssicher ausgelegt werden, wenn beispielsweise ein Dauermagnet mit Remanenz für die Einstellung eines Magnetfeldes verwendet wird. Der Keileffekt verstärkt die Wirkung enorm, sodass ein kleinerer Bauraum erzielbar ist.

In allen Ausgestaltungen müssen die Drehkörper nicht glatt sein, sondern können raue oder unebene Oberflächen aufweisen.

Der Minicomputer kann auch als haptische Bedieneinrichtung eingesetzt werden. Möglich ist der Einsatz als Regler für eine Kranbedienung oder dergleichen. Dabei kann die Drehung je nach Last schwergängiger gesteuert werden. Es kann auch in Abhängigkeit von der Lasthöhe gesteuert werden.

Interessant ist der Einsatz auch bei "Forcefeedback"- oder bei "Steer by wire"-Anwendungen. Auch der Einsatz des Minicomputers an Bedienelementen in Fahrzeugen, Autoradios, Stereoanlagen etc. ist möglich.

In allen Ausgestaltungen ist es möglich, zusätzlich zu einer Dichtung mit einer Dichtlippe auch magnetische Dichtungen zur Abdichtung einer erfindungsgemäßen Vorrichtung einzusetzen. Dabei kann die Dichtung über einen Permanentmagneten erfolgen. Vorteile einer solchen Ausgestaltung sind kleinere Grundkräfte, die Verschleißfreiheit und die Zulässigkeit größerer Fertigungstoleranzen. Außerdem liegt ein definiertes Überlastverhalten vor, da ein definiertes Durchbrechen erfolgt, wenn die Überlast überschritten wird. Es ist möglich, eine solche Dichtung vor oder hinter einer erfindungsgemäßen Vorrichtung oder davor und dahinter einzusetzen.

Ein erheblicher Vorteil der Magnetdichtung ist die sehr geringe Reibung; es kann aber nötig sein, noch eine weitere Dichtung einzusetzen, da eine solche Dichtung gegebenenfalls nur MRF Partikel zurückhält und z. B. Öl als Basisflüssigkeit mit der Zeit durch den Spalt durchtreten lässt. Deshalb kann eine solche magnetische Dichtung als Vordichtung eingesetzt werden, um MRF-Partikel zurückzuhalten. Eine weitere z. B. klassische Dichtung dichtet dann nur noch das Trägermedium ab.

Eine Bewegung des Magneten kann verwendet werden, um im MRF z. B. über hydrodynamische Effekte eine Schmierung, sowie Stofftransport und Kühlung zu erreichen. Außerdem kann eine Strömung von der Dichtung weg erzielt werden und es können Druckunterschiede abgebaut werden.

Um z. B. das Spiel zwischen zwei Teilen einzustellen oder aber um Spiel aus einer Konstruktion herauszunehmen und um z. B. Fertigungstoleranzen auszugleichen, kann eine Kraft bzw. eine Axialkraft und/oder eine Radialkraft eingesetzt werden, die durch einen MRF Keileffekt hervorgerufen wird.

In allen Ausgestaltungen ist es bevorzugt, eine einstellbare dauerhafte Magnetfeldstärke über Remanenz vorzusehen. In bevorzugten Ausführungsformen hat ein Lager mit einer erfindungsgemäßen magnetorheologischen Übertragungsvorrichtung selbst keinen oder nur minimalen Restmagnetismus (Remanenz). Ansonsten kann es zu einer positionsabhängigen und unterschiedlich starken Gegenkraft kommen, da sich die Teile zueinander bewegen.

Das Remanenzmaterial sollte in vorteilhaften Ausgestaltungen in einem allgemeinen Bereich des Lagers angeordnet sein, der insbesondere positionsunabhängig von dem Magnetfeld durchflutet wird, so z. B. die innere Welle oder die äußere Hülle etc.

Es ist aber auch bevorzugt, den Effekt der positionsabhängigen Magnetisierung zu nutzen, indem z. B. die innere Lauffläche mit Remanenz eingesetzt wird, um beispielsweise bestimmte Rastmomente zu erzeugen. Das kann z. B. für eine haptische Rückkopplung über veränderbare Rastmomente bezüglich ihrer Stärke, des Drehwinkels oder des Endanschlags oder dergleichen erfolgen. Je nach gewünschter Einstellbarkeit müssen nicht alle Lagerkugeln ferromagnetisch sein.

Es ist auch möglich, eine magnetorheologische Übertragungsvorrichtung mit vom klassischen Lageraufbau abweichender Gestaltung vorzusehen. Die Richtung des Magnetfeldes kann z. B. wenigstens teilweise oder vollständig auch etwa parallel zur Achse ausgerichtet sein. Möglich ist auch eine wenigstens teilweise Ausrichtung parallel zur Dreh- oder Bewegungsrichtung oder in tangentialer Richtung. Möglich ist es auch, dass der gesamte magnetische Kreis nahezu oder vollständig im Inneren angeordnet ist.

Das Material des magnetorheologischen Übertragungsvorrichtung muss nicht komplett ferromagnetisch sein, je nach gewünschter Anwendung bzw. Magnetisierung kann es vorteilhaft sein, wenn einzelne Bestandteile der magnetorheologischen Übertragungsvorrichtung nicht bzw. nur teilweise ferromagnetisch sind.

Je nach Anwendung ist es auch denkbar, wenigstens einen Teil aus verschiedenen Materialien zu fertigen, um lokal unterschiedliche magnetische Eigenschaften zu erhalten.

Der Minicomputer funktioniert vorzugsweise mit einer magnetorheologischen Übertragungsvorrichtung mit Keileffekt. Die Position bzw. der Drehwinkel des Drehknopfs kann über den Drehgeber bestimmt und der Drehwiderstand in einem weiten Bereich verändert werden. Dadurch kann beispielsweise ein haptisches Interface mit veränderbaren Rastmomenten und beliebig einstellbarem Endanschlag aufgebaut werden, welcher je nach gerade angewähltem Menü seine Eigenschaften ändert. Es kann ein niederes oder hohes Moment und/oder ein kleines oder großes Raster/Rippel und auch ein variables Raster - je nach zu bedienendem Menü - eingestellt werden. Der Verlauf der Momentenzu- und -abnahme kann situationsabhängig eingestellt oder variiert werden, beispielsweise als rechteck-, sinus-, sägezahnförmiger oder beliebiger Verlauf. Auch ein Anschlag kann simuliert werden. Der Anschlag kann hart sein oder einen vordefinierten oder situationsabhängigen Momentenverlauf haben. Beim Drehen in eine Richtung kann der Momentenverlauf anders wie beim Drehen in die andere Richtung sein.

Die Dreheinheit bzw. der Drehknopf als eine Komponente ist vorzugsweise fest mit der Welle als anderer Komponente verbunden, welche wiederum drehbar im Gehäuse gelagert ist. Die Relativbewegung bzw. Relativposition wird über einen Drehgeber erfasst, z. B. über einen magnetischen, optischen oder (über Tasten) mechanischen Inkrementalgeber. Auch ein Potentiometer mit Schleifkontakten kann eingesetzt werden, mit diesem sind aber üblicherweise nur bestimmte Drehwinkel zulässig.

Ein Dichtring ist vorteilhaft, damit die magnetorheologische Flüssigkeit im Gehäuse bleibt. Die Dichtung kann auch nur aus Permanentmagneten oder einer Kombination aus Permanentmagnet und herkömmlicher Dichtung bestehen.

Der innere Bereich, d.h. das von Dichtung und Gehäuse eingeschlossene Volumen, ist zumindest teilweise mit einer magnetorheologischen Flüssigkeit gefüllt.

Das Gehäuse ist vorzugsweise als Topf ausgebildet, d. h. einseitig geschlossen. Dadurch wird nur ein Dichtring benötigt. Eine durchgehende Welle (beidseitige Welle) ist auch denkbar.

Die Spule kann ein Magnetfeld erzeugen, wobei der magnetische Kreis über das Gehäuse, die Welle und die magnetorheologische Übertragungsvorrichtung geschlossen wird. Dadurch kann sich in der magnetorheologischen Übertragungsvorrichtung das für den Keileffekt nötige Magnetfeld aufbauen. Vorteilhafterweise ist die Spule fest mit dem Gehäuse verbunden, was die Kabelführung erleichtert.

Der Aufbau ist robust und kann so ausgelegt sein, dass fast keine magnetischen Streufelder außerhalb des Gehäuses erzeugt werden. Denkbar sind aber viele andere Aufbauvarianten, die je nach Anwendungsfall bestimmte Vorteile haben können.

Beispielsweise kann die Spule auch außerhalb des Gehäuses angeordnet sein, wobei das Magnetfeld dann durch das Gehäuse hindurch auf die magnetorheologische Übertragungsvorrichtung wirkt. Dabei ist keine mechanische Verbindung zwischen Spule und Gehäuse nötig, das Koppeln der magnetischen Kreise reicht, um die magnetorheologische Übertragungsvorrichtung im Gehäuse zu beeinflussen. Insbesondere muss die Spule nicht dauerhaft am oder in der Nähe des Gehäuses sein und kann derart gestaltet werden, dass sie als separate Einheit vom Gehäuse entfernt werden kann. Es können auch Permanentmagnete im Magnetkreis vorhanden sein.

Der Drehknopf kann in einer bevorzugten Ausführung beispielsweise elektromagnetisch angetrieben sein und auch aktiv eine Kraft ausüben (Force Feedback), um statisch ein gewisses Gegenmoment erzeugen zu können. Bei dieser Konstruktion wird ein besseres Drehmoment zu Bauraumverhältnis erzielt als bei vielen Konstruktionen nach dem Stand der Technik. Zudem sind die Herstellkosten wegen des einfachen Aufbaus gering, da z. B. die Abrollflächen der Komponenten bei Haptikanwendungen nicht hochpräzise sein müssen und auch in der Regel keine hohen Drehzahlen und keine große Anzahl an Umdrehungen aushalten müssen. Generell hat die hier beschriebene magnetorheologische Übertragungsvorrichtung eine sehr niedere Grundreibung (OFF State). Vorzugsweise ist auch eine Batterie und ein Steuerbefehlübertragungseinheit (Funk, WLAN, Bluetooth, ANT..) in den Steller bzw. Drehknopf integriert. Der Haptikknopf kann dann überall platziert werden und braucht keinen leitungsgebundenen Steuer- bzw. Stromanschluss. Das MRF Keilprinzip braucht in Relation zum Drehmoment sehr wenig Strom (Leistung). Deshalb ist es auch für den Batteriebetrieb oder zur drahtlosen Energieversorgung gut geeignet. Dabei können sowohl die benötigte Energie als auch Steuerbefehle und beispielsweise auch Messwerte von Sensoren wie Drehwinkel drahtlos übertragen werden.

Eine bevorzugte Ausführung kommt ohne Batterie aus und erhält die für die Funktion notwendige Energie mittels induktiver Kopplung. Besonders bevorzugt sind auch Ausführungen, die die zum Betrieb nötige Energie direkt aus der Umwelt beziehen und lokal zwischenspeichern (Energy Harvesting). Dabei sind zur Energiewandlung thermoelektrische Generatoren, Solarzellen, Elemente die Vibrationsenergie in elektrische Energie wandeln und Andere sowie entsprechende lokale Energiespeicher möglich. Denkbar ist auch, die Bewegung der magnetorheologischen Übertragungsvorrichtung selbst zur Energieerzeugung zu verwenden.

Wenn die magnetorheologische Übertragungsvorrichtung wenigstens teilweise über einen Dauermagneten mit einem magnetischen Magnetfeld beaufschlagt wird, dessen Magnetisierung durch wenigstens einen magnetischen Impuls wenigstens einer elektrischen Spule dauerhaft verändert wird, ergeben sich einige Vorteile. In bestimmten Fällen kann z. B. durch die Ausnutzung der Remanenz und des Impulsbetriebs einer Spule, die nicht immer bestromt werden muss, ein Gewichts- und Raumvorteil erzielt werden. Die Drähte der Spule können dünner und leichter dimensioniert werden, weil sie jeweils nur für eine kurze Betriebszeit bestromt werden. Das kann Vorteile bei Gewicht, Strombedarf, Platzbedarf und Kosten ergeben.

Deshalb kann es in bestimmten Anwendungen vorteilhaft sein, dass durch den Impulsbetrieb der elektrischen Spule diese deutlich kleiner ausgeführt werden kann, als wenn sie auf 100% Einschaltdauer ausgelegt werden muss. Die Erwärmung der Spule spielt im Impulsbetrieb üblicherweise keine Rolle, da kurzzeitige Verlustleistungsspitzen von der eigenen Wärmekapazität der Spule und der die Spule umgebenden Bauteile abgepuffert werden. Dadurch können sehr hohe Stromdichten in den Windungen toleriert werden bzw. können dünnere Leitungen verwendet werden, solange die mittlere Verlustleistung über längere Zeiträume akzeptabel bleibt.

Üblicherweise kann bei einer kleineren Spule auch der die Spule umgebende magnetische Kreis kleiner ausfallen, weshalb verhältnismäßig viel Bauraum, Material, Gewicht und Kosten eingespart werden können. Dabei steigt lediglich der Energieaufwand für einen einzelnen Puls, was aber je nach Anwendung sehr wohl toleriert werden kann. Insgesamt kann dennoch viel Energie im Vergleich zu einer dauerhaft bestromten Spule eingespart werden.

In allen Ausgestaltungen kann es möglich sein, die Stromversorgung leitungslos zu realisieren. Die Stromversorgung beispielsweise von der Stromquelle zur Leistungselektronik bzw. von der Leistungselektronik zu der Spule kann über eine elektrische, magnetische oder elektromagnetische Kopplung wie beispielsweise eine Funkstrecke erfolgen. Bei der Anwendung in einem Fahrrad kann die Stromversorgung von außen über z. B. eine Docking Station erfolgen. Möglich ist auch die Energieversorgung über eine Energiequelle an z. B. einem Fahrrad auf alle Verbraucher (Gabel, Dämpfer Hinten, Display). Analog kann auch die Stromversorgung bei einem Skischuh, Ski, Mobiltelefon oder zu den Sensoren erfolgen.

Eine Energieversorgung über Funk kann möglicherweise einen schlechteren Wirkungsgrad als eine herkömmliche Verkabelung aufweisen. Außerdem kann die Energieübertragung und deren Reichweite begrenzt sein. Je nach Anwendungsfall stören solche Nachteile aber nicht. Vorteilhaft ist, dass kein Verschleiß der Kontakte auftritt. Die Energieübertragung ist üblicherweise verpolsicher und kurzschlussfest, da sekundärseitig nur eine begrenzte Leistung vorliegt. Weiterhin ist kein Kabelbruch möglich und die Vorrichtung ist insgesamt beweglicher.

Bei solchen Ausgestaltungen ist es aber vorteilhaft, die Energie für zumindest einen Impuls in einem Kondensator oder Energiespeicher zwischenzuspeichern. Dadurch kann die Energieversorgung des Systems eine kleinere Leistung haben, da kurzzeitige Leistungsspitzen eines Impulses vom Kondensator abgefangen werden. Zudem kann auch eine unstetige oder impulsförmige Energieversorgung eingesetzt werden.

Eine mögliche Ausbaustufe der vorliegenden Erfindung ist ein vollkommen autarkes System, welches kabellos mit Energie versorgt wird. Vorstellbar ist beispielsweise die Anwendung an einem Fahrrad, wobei durch zumindest einen kleinen Magneten an einem Reifen das System mit Energie versorgt wird.

Generell können so beliebige "Energy Harvesting"-Einheiten zur Energieversorgung verwendet werden, beispielsweise Solarzellen, thermoelektrische Generatoren oder Piezo-Kristalle. Auch Elemente, welche Vibrationen in Energie wandeln, können so sehr vorteilhaft zur Versorgung eingesetzt werden.

Denkbar ist auch eine Ausführung ähnlich wie bei einer elektrischen Zahnbürste, bei der die Energieversorgung durch induktive Kopplung erfolgt. Dabei kann beispielsweise der Akku induktiv geladen werden, ohne dass beschädigte Kabel, korrodierte oder verschmutzte Kontakte den Ladevorgang behindern. Über längere Strecken kann Energie über magnetische Resonanz übertragen werden.

Die Stromversorgung des Remanenzimpulses kann via Induktion wie bei elektrischen Zahnbürsten erfolgen. Die Kombination des MRF Keilprinzips mit Remanenz ist besonders stromsparend und vorteilhaft.

Es kann auch ein Lautsprecher bzw. eine Geräuscherzeugungseinheit integriert oder zugeordnet sein. Das ist vorteilhaft, da der Drehknopf als MRF Keilknopf an sich mechanisch geräuschlos ist. Sowohl das Drehen ohne als auch mit Raster oder/und die virtuellen Anschlägen sind an sich geräuschlos. Das Erzeugen des MRF Keils zu einer Drehmomenterhöhung oder zur Erzeugung eines Rasters ist ebenso an sich geräuschlos. Mittels der Geräuschquelle wie einem Lautsprecher oder einem Piezolautsprecher kann z. B. dem virtuellen Raster ein Klicken bei jeder Rastposition zugeordnet werden. Die Art, Lautstärke und Dauer des Geräusches kann individuell zugeordnet werden, aber bei Benutzerwunsch auch verändert oder abgeschaltet werden.

Somit ist das Drehmoment, der Raster, die Anschläge und das Geräusch programmierbar bzw. adaptiv. Die Geräusche können auch über externe Lautsprecher wie z. B. Standardlautsprecher im Auto oder die Lautsprecher der Hi-Fi Anlage im Haus erzeugt werden.

Der Haptikknopf kann somit praktisch das Mausrad einer Computermaus ersetzen. Bei dem Raster kann nicht nur der Winkelabstand des Rasters einstellbar sein, sondern auch dessen Verlaufsform, Stärke usw. Damit kann quasi eine Rasterkennlinie vorgeben werden.

Der Haptikdrehknopf kann auch auf einer Bedienfläche oder an einem Bildschirm montiert sein. Damit man das Display nicht für die Befestigung des Knopfes herausnehmen muss, kann dieser aus einem Oberteil auf dem Display und einem Unterteil unterhalb des Displays bestehen. Vorzugsweise ist eine Datenübertragung über z. B. Induktion oder dergleichen vorgesehen. Dadurch kann das Display als eine Fläche billiger hergestellt werden.

Es ist auch möglich, dass ein MRF Haptikknopf sich auch drücken lässt. Dabei kann das Drücken auch durch ein MRF wirken, dessen Eigenschaften über ein Magnetfeld veränderbar sind.

Der Bildschirm zeigt die einzustellenden Informationen an, welche sich je nach Anwendung ändern. Die Funktion des Haptikknopfes passt sich daran an. Einmal wird mittels eines Rasters verstellt (z. B. Einstellen der Lautstärke; auf dem Display erscheint eine Lautstärkenskala, welche auch eine logarithmische Skalierung haben kann).

Ein anderes Mal kann zwischen zwei Positionen ohne Raster aber mit variablem Moment verstellt werden, so z. B. zwischen der Uhrstellung 8:00 und der Uhrstellung 16:00, wobei vor der Endposition jeweils ein zunehmendes Moment vorgesehen sein kann. Das Raster kann auch zum Anfahren definierter Positionen dienen, wenn z. B. nach einer Nameneingabe gefragt wird.

Das Display kann auch als Touchscreen ausgeführt sein. Dadurch können Menüpunkt rasch gewählt und mittels des Drehstellers Feineinstellungen gemacht werden. Z. B. ist es bei Autos nicht gewünscht, die Lautstärkenregelung des Radios über Touchscreen zu machen, da der Fahrer sonst immer lange hinschauen müsste, was und wo er gerade verstellt, was ihn ablenkt. Den Drehsteller findet er auch mit einem kurzen Blick oder ohne Hinsehen.

Auch z. B. beim Fahrradfahren ist das Verstellen mit einem mechanischen Steller einfacher und sicherer als über ein Touchdisplay. Dies insbesondere auch dann, wenn der Radfahrer z. B. Handschuhe an hat, wodurch die Bedienung eines Touchdisplay schwer oder sogar unmöglich ist.

Es ist auch eine Kombination von einem Display oder Touchdisplay und einem mechanischem Drehsteller mit variablem Moment/Raster möglich. Solche Minicomputer können auch außerhalb z. B. bei Steuerungen für Industrieanlagen, Fernbedienungen für z. B. Fernseher oder Funkfahrzeuge wie Spielzeughubschrauber, sowie an PC und Spielkonsolen, Steuerkonsolen für militärische Anwendungen (Drohnenflugzeuge, Raketen) interessant sein.

Möglich ist es auch, dass ein Haptikdrehknopf mit einer Anzeige die jetzige Computermaus ersetzt.

Es ist möglich, dass der Drehknopf bzw. das Stellglied in normalen Zustand versenkt sein kann und nur bei Bedarf ausgefahren wird.

Es ist auch möglich, eine solche Baueinheit als Schieberegler auszuführen, insbesondere in Kombination mit einer linearen MRF Keileinheit.

Es ist auch möglich, eine magnetorheologische Übertragungsvorrichtung mit einem oder mehreren Polen und einer oder mehreren Erhebungen auszustatten. In allen Ausgestaltungen ist es möglich, dass zwischen den zwei Komponenten der magnetorheologischen Übertragungsvorrichtung Erhebungen oder dergleichen vorgesehen sind, die beispielsweise von der einen Komponente in Richtung auf die andere Komponente hervorstehen.

Sowohl bei einer rotativen als auch bei einer linearen Beweglichkeit der beiden Komponenten zueinander ist eine solche Ausgestaltung möglich und bevorzugt.

Dabei kann nur eine Erhebung vorgesehen sein oder es können mehrere vorgesehen sein. Möglich ist es, dass an wenigstens einer Erhebung eine Kugel oder eine Rolle oder ein sonstiger Drehkörper angeordnet ist, der von der Erhebung wenigstens teilweise aufgenommen wird.

Wenn an der einen Komponente Erhebungen vorgesehen sind, ist es bevorzugt, dass an der anderen Komponente wenigstens ein Pol bzw. wenigstens eine Magnetisierungseinheit oder wenigstens ein Magnet oder einer Spule vorgesehen ist. Die Anzahl der Magnetisierungseinheiten bzw. Pole kann 1 betragen oder auch größer sein.

Die Form der Erhebungen kann grundsätzlich beliebig und z. B. halbrund, spitz oder stumpf sein. Der Aufnahmebereich von Drehkörpern ist vorzugsweise entsprechend abgerundet ausgebildet.

Eine oder mehrere Magnetisierungseinheiten bzw. Pole können als Elektrospule plus Kern, oder als Permanentmagnet ausgebildet sein oder aus Remanenzmaterial oder einen Kombination aus diesen bestehen.

Die Abstände zwischen einzelnen Erhebungen und/oder Magnetisierungseinheiten sind vorzugsweise etwa gleichbleibend, können aber auch beliebig sein.

Die Tiefe, d. h. die radiale Erstreckung oder die axiale Erstreckung einzelner Erhebungen oder Magnetisierungseinheiten zu anderen kann unterschiedlich sein.

Auch die an den einzelnen Magnetisierungseinheiten anliegende oder wirkende Feldstärke kann insbesondere auch zur gleichen Zeit variieren.

Die Drehzahl der Drehkörper muss nicht gleich der Abrolldrehzahl sein, sie kann auch davon abweichen, z. B. durch Unter- oder Übersetzungen. Das Innenteil, welches durch die Erhebungen z. B. sternförmig ausgebildet ist, kann zum Außenteil außermittig gelagert sein.

Eine Anwendung einer solchen magnetorheologischen Übertragungsvorrichtung kann z. B. als Haptikknopf mit Raster oder bei Möbel- und Schubladenführungen mit Positionen erfolgen.

Der Magnet bzw. jede Magnetisierungseinheit oder das Innenteil und/oder das Außenteil können auch aus Remanenzmaterial bestehen.

Da magnetorheologische Fluide bei Anlegung eines Magnetfeldes sehr schnell verketten, kann es im Normalzustand z. B. beim Autofahren ausreichen, wenn das magnetische Feld abgeschaltet ist. Es reicht in der Regel völlig aus, erst einzuschalten, wenn eine erste Drehwinkeländerung eingeleitet wird. Dadurch kann erheblich Energie eingespart werden.

Alternativ dazu kann mit Remanenz ein Grundmoment realisiert werden. Wenn eine Drehwinkeländerung registriert wird, kann ein dynamisches Magnetfeld aufgebaut werden, welches auch pulsieren kann, um ein virtuelles Raster zu erzeugen.

In Ausgestaltungen, in denen die Remanenz genutzt wird, kann das Magnetfeld zum Ummagnetisieren von außen aufgeprägt werden. Zum Ummagnetisieren kann eine entsprechende Spule verwendet werden, die durch z. B. einen Zylinder wirkt. Vorzugsweise wird beim Drücken der haptischen Bedieneinrichtung und/oder der Dreheinheit ein selektierter Menüpunkt aktiviert. Die Anzeigeeinheit kann touchsensitive oder berührungsempfindlich sein (wie z. B. kapazitiv, induktiv...), sodass durch Berühren beispielsweise mit dem Finger oder dergleichen eine Auswahl eines Menüpunktes erfolgen kann. In all diesen Ausgestaltungen ist es möglich und bevorzugt, dass sowohl ein Drücken der haptischen Bedieneinrichtung als auch ein Bedienen mit dem Finger möglich ist.

Die Anzeigeeinheit kann ein LCD, TFT, IPS, Retina, Nova, White Magic, OLED, AMOLED oder anderer Bildschirmtyp sein.

Das erfindungsgemäße Verfahren dient insbesondere zum Bedienen eines Minicomputers und vorzugsweise einer Smartwatch. Dabei wird eine haptische Bedieneinrichtung mit einer Dreheinheit verwendet und auf einer Anzeigeeinheit werden auswählbare Menüpunkte angezeigt. Durch Drehen der Dreheinheit kann ein Menüpunkt selektiert werden. Während der Drehung der Dreheinheit wird ein Drehwiderstand dynamisch verändert. Dadurch wird es möglich, ein variables und insbesondere haptisches Raster dynamisch zu erzeugen.

Das erfindungsgemäße Verfahren hat besondere Vorteile. Ein erheblicher Vorteil des erfindungsgemäßen Verfahrens besteht darin, dass eine dynamische Veränderung des Drehwiderstandes beim Betätigen der Dreheinheit möglich wird. Dadurch kann der Benutzer haptisch und somit fühlbar auf Eigenschaften hingewiesen werden. Beispielsweise kann in einer anzuzeigenden Liste von Menüpunkten auf ein Ende einer Liste hingedeutet werden. Dazu kann beispielsweise der Drehwiderstand beim Erreichen einer Liste von Menüpunkten stärker werden.

Vorzugsweise wird während der Drehung der Dreheinheit ein haptisches Raster mit Rasterpunkten dynamisch erzeugt. Dabei rastet die Dreheinheit insbesondere beim Drehen an einer Anzahl von haptisch fühlbaren Rasterpunkten. Dazu kann beispielsweise an den Rasterpunkten jeweils ein lokales Minimum des Drehwiderstandes vorliegen. Benachbart zu den Rasterpunkten kann ein lokales Maximum des Widerstandes vorliegen oder es wird dort ein Plateau erzeugt mit gleich bleibendem Drehwiderstand, bis bei einem anderen Winkel ein nächster Rasterpunkt mit einem lokalen Minimum des Drehwiderstands erreicht wird.

Die Erfindung ermöglicht auf einfache Art und Weise die Bedienung eines Minicomputers mit einer entsprechend kleinen Anzeige. Dabei kann die Anzeigeeinheit berührungssensitiv sein. Möglich kann dann ein Bedienen über das Berühren der berührungsempfindlichen Anzeigeeinheit sein. Möglich ist es auch, den Minicomputer über das Drehen der Dreheinheit zu bedienen. Dabei kann beispielsweise bei der Auswahl eines Kontaktes aus einer Liste von Kontakten jeder einzelne Kontakt als Menüpunkt dargestellt werden. Beim Drehen der Dreheinheit wird dann durch die einzelnen Kontakte durchgegangen.

Möglich ist es, dass die Dreheinheit über einen Betätigungssensor verfügt oder dass der Dreheinheit ein Betätigungssensor für axiale Kräfte und/oder Verschiebungen zugeordnet ist, sodass beim axialen Drücken der Dreheinheit gegebenenfalls eine Funktion des Minicomputers ausgelöst wird. Beispielsweise kann beim Drücken der Dreheinheit in axialer Richtung (oder beim Ziehen der Dreheinheit in axialer Richtung) der aktuell ausgewählte Menüeintrag bzw. der aktuell angezeigte Menüeintrag ausgewählt werden.

Entspricht der aktuell ausgewählte Menüeintrag einem Kontakt, so werden die einzelnen Kontaktinformationen (Telefonnummern, Adressen etc.) angezeigt und können gegebenenfalls bearbeitet werden.

Entspricht hingegen der angezeigte Menüeintrag bzw. Menüpunkt einer auszuführenden Funktion, so wird beim Drücken der Dreheinheit in axialer Richtung und/oder beim Ziehen der Dreheinheit in axialer Richtung die aktuell ausgewählte Funktion aktiviert. Beispielsweise kann dazu ein Untermenü aufgerufen werden oder es handelt sich um eine Funktion, die direkt ausgeführt werden kann, wie zum Beispiel das Schreiben einer Textnachricht oder einer E-Mail oder das Starten eines Programms.

Die Kommunikationseinheit des Minicomputers dient insbesondere zur Aufnahme und Bereitstellung von Datenverbindungen mit einem lokalen Netz oder mit dem Internet oder mit bestimmten und/oder zuvor ausgewählten Computern oder Netzwerken oder dergleichen mehr.

Vorteilhafterweise kann der Minicomputer mit einem handgehaltenen Computer, wie einem Smartphone oder einem Laptop oder dergleichen gekoppelt werden, um Daten auszutauschen.

Besonders bevorzugt wird durch gezieltes Erzeugen eines Magnetfeldes an einem wenigstens teilweise mit einem magnetorheologischen Medium gefüllten Kanal ein Rasterpunkt oder wenigstens ein Rasterpunkt bzw. eine Vielzahl von Rasterpunkten erzeugt.

Bei dem Minicomputer und auch bei dem Verfahren wird vorzugsweise eine Winkelstellung der Dreheinheit detektiert und es wird vorzugsweise in Abhängigkeit von der detektierten Winkelstellung der Drehwiderstand insbesondere über eine Intensität des Magnetfeldes eingestellt.

Vorzugsweise wird in wenigstens eine Drehrichtung ein Endanschlag dynamisch erzeugt. Dabei wird vorzugsweise der Drehwiderstand an dem Endanschlag erheblich stärker eingestellt als an anderen Drehwinkeln und/oder an Rasterpunkten.

Insbesondere wird ein Rasterpunkt einer bestimmten Winkelposition dadurch erzeugt, dass an Winkelstellen benachbart zu der bestimmten Winkelposition ein stärkerer Drehwiderstand erzeugt wird als an der für den Rasterpunkt bestimmten Winkelposition.

Vorzugsweise wird ein Winkelabstand wenigstens zweier benachbarter Rasterpunkte dynamisch eingestellt. Das bedeutet, dass der Winkelabstand Situation bezogen sich dann kann. Wenn beispielsweise nur zwei Rasterpunkte vorgesehen sind, kann der Winkelabstand größer sein, als wenn eine Vielzahl von Rasterpunkten erzeugt werden soll. In allen Fällen ist es bevorzugt möglich, die Dreheinheit im abgeschalten Zustand endlos und/oder frei zu drehen.

In allen Ausgestaltungen kann ein Dauermagnet eingesetzt werden, dessen Magnetfeld dynamisch mit einem Magnetfeld einer elektrischen Spule überlagerbar ist. Dadurch kann auch im ausgeschalteten Zustand ein dauerhafter Drehwiderstand eingestellt werden. Gegebenenfalls kann dieser Drehwiderstand im eingeschalteten Zustand auch verringert werden.

In allen Ausgestaltungen ist es bevorzugt, dass die Anzahl der Rasterpunkte der Anzahl der aktuell verfügbaren Menüpunkte oder Listeneinträge entspricht oder einem ganzzahligen vielfachen der Anzahl der Rasterpunkte entspricht.

Vorzugsweise wird beim Drücken der haptischen Bedieneinrichtung und oder der Dreheinheit ein selektierter Menüpunkt aktiviert.

Es ist möglich, dass beim Aktivieren eines Menüpunkts ein zugehöriger Verfahrensschritt ausgeführt oder ein zugehöriges Untermenü angezeigt und die Anzahl der Rasterpunkte dynamisch an die auswählbaren Menüpunkte des Untermenüs angepasst wird.

In allen Fällen kann die Dreheinheit als Krone ausgeführt sein und optisch den Kronen von bekannten Armbanduhren entsprechen. Eine damit ausgerüstete Smartwatch ist aufgrund der steuerbaren haptischen Eigenschaften viel einfacher zu bedienen, als solche aus dem stand der Technik.

An der Anzeigeeinheit können nicht nur situationsbezogen relevante Daten angezeigt und eingestellt werden, sondern es können auch andere Daten wie z. B. die Uhrzeit, SMS, das Telefonbuch angezeigt werden.

Es ist möglich, bei der Anzeigeeinheit über "Pinch to Zoom" mit zwei Fingern zu zoomen, indem sie auseinander bzw. zusammen gezogen werden. Dies ist auf der einer herkömmlichen Smartwatch nicht immer möglich, da das Display zu klein ist um mit zwei Fingern angenehm bzw. komfortabel zu zoomen.

Auch die Bedienung mit dem Handschuh z. B. im Winter ist einfacher. Smartwatches verfügen zumeist über ein kapazitives Display, welches sich kaum bzw. je nach Hersteller gar nicht mit Handschuhen bedienen lässt. Eine haptische Bedieneinrichtung hat hier klare Vorteile. Bei der Benutzung eines Mobiltelefons akzeptiert man das Ausziehen des Handschuhes noch eher, da dieses oftmals aus einer Tasche gezogen werden muss. Bei einer Smartwatch ist aber der schnelle Zugang sehr vorteilhaft. Außerdem kann bei kleinen Displays Scrollen fälschlicherweise als Drücken erkannt werden, was bei der vorliegenden Erfindung vermieden werden kann.

Weitere Vorteile und Merkmale der vorliegenden Erfindung ergeben sich aus den Ausführungsbeispielen, die mit Bezug auf die beiliegenden Figuren im Folgenden erläutert werden.

In den Figuren zeigen:
- Fig. 1: einen Querschnitt durch eine Krone als haptischer Bedieneinrichtung eines erfindungsgemäßen Minicomputers;
- Fig. 2: ein vergrößertes Detail aus Fig. 1
- Fig. 3: eine stark schematische Ansicht des Wirkprinzips einer magnetorheologischen Übertragungsvorrichtung der haptischen Bedieneinrichtung im Querschnitt;
- Fig. 4: einen erfindungsgemäßen Minicomputer mit einer haptischen Bedieneinrichtung;
- Fig. 5: den Minicomputer nach Fig. 4 in einer leicht perspektivischen Darstellung;
- Fig. 6: eine weitere Ausführungsform eines Minicomputers;
- Fig. 7: noch eine Ausführungsform eines erfindungsgemäßen Minicomputers;
- Fig. 8a-8c: einen Steuerungsablauf eines erfindungsgemäßen Minicomputers; und
- Fig. 9a-c: mögliche Drehmomentverläufe über dem Drehwinkel einer haptischen Bedieneinrichtung eines erfindungsgemäßen Minicomputers.

Mit Bezug auf die beiliegenden Figuren werden im Folgenden Ausführungsbeispiele von Minicomputern 300 mit haptischen Bedieneinrichtungen 200 erläutert. Dabei weist eine haptische Bedieneinrichtungen 200 jeweils eine magnetorheologische Übertragungsvorrichtungen 1 auf. Gleiche oder ähnliche Teile sind mit den gleichen Bezugszeichen versehen.

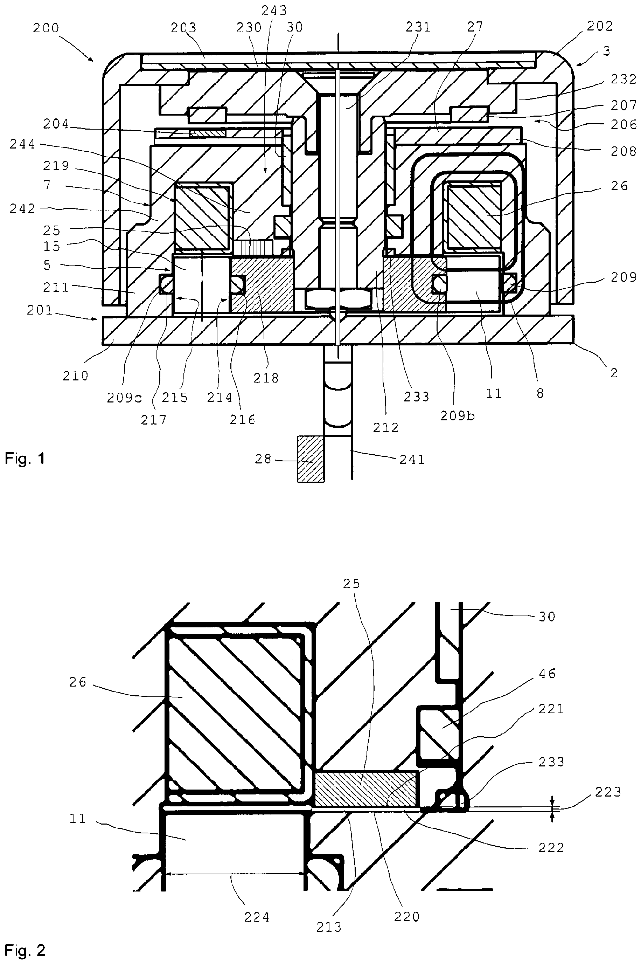

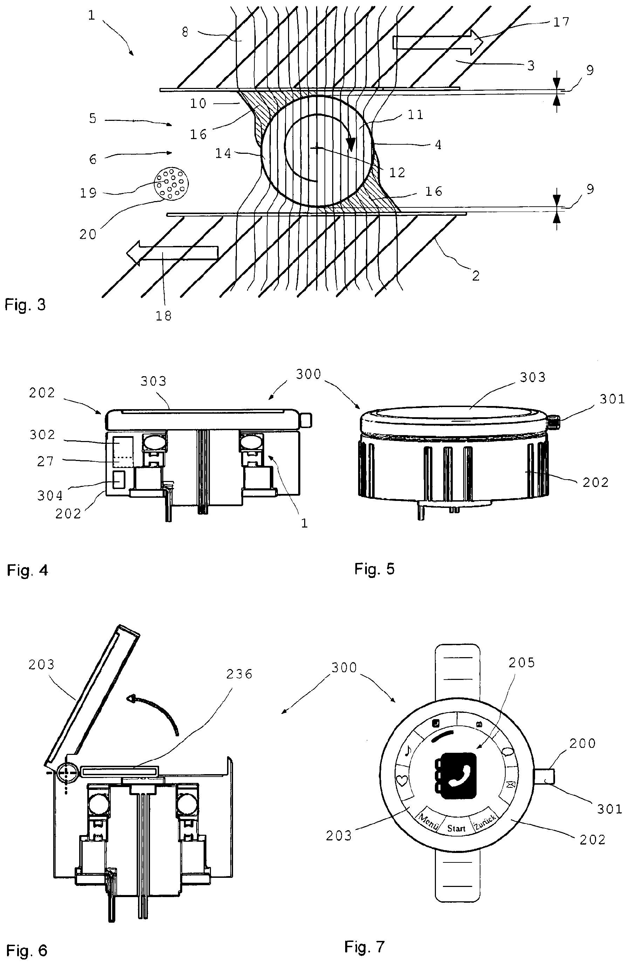

In Figur 1 ist ein schematischer Querschnitt einer ersten Krone 301 eines Minicomputers 300 mit einer haptischen Bedieneinrichtung 200 abgebildet, wobei in der haptischen Bedieneinrichtung 200 eine magnetorheologische Übertragungsvorrichtung 1 enthalten ist, deren genaue Funktion weiter unten mit Bezug auf die Figur 3 erläutert wird.

Figur 1 zeigt einen Querschnitt, wobei als Komponente 2 hier der feststehende Grundkörper 201 oder das Gehäuse des Minicomputers 300 dient, an dem als Komponente 3 die Dreheinheit 202 drehbar aufgenommen ist. Der Grundkörper 201 weist ein Aufnahmegehäuse 211 auf, welches an einer separaten Grundplatte 210 befestigt ist. Beispielsweise kann das Aufnahmegehäuse 211 nach der Montage der darin angeordneten Teile mit der Grundplatte 210 verklebt werden. Gegenüber dem Grundkörper 201 ist hier die Dreheinheit 202 drehbar aufgenommen. Die Dreheinheit 202 umfasst hier eine Welle 212 an der ein Halter 232 über eine Schraube 231 angeschraubt ist. Der Halter 232 ist von der eigentlichen Dreheinheit 202 umgeben. Die Dreheinheit 202 kann außen ergriffen und gedreht werden.

Die Welle 212 ist über ein Lager 30 drehbar an dem Aufnahmegehäuse 211 gelagert. Das Lager 30 kann beispielsweise als Gleitlager ausgeführt sein, kann aber auch ein sonstiges Wälzlager umfassen.

Im Innenraum 213 ist in dem hier rotationssymmetrischen Grundkörper 201 und genauer in dem Aufnahmegehäuse 211 ein ringförmiger Aufnahmeraum 213 vorgesehen, der hier durch eine elektrische Spule 26 als Felderzeugungseinrichtung 7 ausgefüllt ist. Eventuelle Freiräume können durch beispielsweise eine Vergußmasse oder einen Füllstoff ausgefüllt werden, der gleichzeitig dazu dient, die elektrische Spule 26 in dem ringförmigen Aufnahmeraum zu halten.

Es ist möglich, wie auf der linken Seite von Figur 1 eingezeichnet, dass ein zusätzlicher Dauermagnet 25 oder mehrere zusätzliche Dauermagnete 25 an dem Aufnahmegehäuse 211 vorgesehen sind, um unabhängig von einer Stromquelle ein permanentes Magnetfeld zu erzeugen. Gegebenenfalls kann die Magnetisierung des Dauermagneten 25 über entsprechende magnetische Impulse der elektrischen Spule 26 verändert werden.

In dem Innenraum 213 zwischen dem Aufnahmegehäuse 211 und der Welle 212 ist ein Kanal 5 vorgesehen, der teilweise mit hier zylinderförmigen Drehkörpern 11 ausgefüllt ist, die insbesondere symmetrisch über dem Umfang des Kanals 5 angeordnet sind. Die Drehkörper drehen bei der Rotation der beiden Komponenten 2, 3 gegeneinander mit, da die Drehkörper 11 regelmäßig mit dem Aufnahmegehäuse 211 und/oder der Welle 212 in Kontakt stehen und so darauf abrollen.

Zur Unterstützung des Abrollens und zur Gewährleistung eines rollenden Kontakts kann wenigstens ein Kontaktring 209 (Reibring) vorgesehen sein. Ein solcher Kontaktring kann insbesondere als O-Ring oder Rechteckring ausgeführt sein und beispielsweise aus einem gummiartigen Material bestehen.

Ein derartiger Kontaktring 209 kann beispielsweise in einer umlaufenden Nut 217 auf der Lauffläche 215 des Aufnahmegehäuses 211 angeordnet sein. Möglich ist es auch, dass ein weiterer Kontaktring 209b in einer Nut 216 an der Lauffläche 214 an einem vergrößerten Umlaufring 218 der Welle 212 angeordnet ist. Der Umlaufring 218 kann einstückig mit der Welle 212 ausgebildet sein. Vorzugsweise ist der Umlaufring 218 ein separates und drehfest mit der Welle 212 verbundenes Bauteil. Vorzugsweise besteht der Umlaufring 218 aus einem gut magnetisch leitenden Material. Vorzugsweise besteht der Umlaufring 218 aus einem weichmagnetischen Material.

Möglich und bevorzugt ist es, dass ein Kontaktring 209 in der Nut 217 angeordnet ist und dass ein Kontaktring 209b in der inneren Umfangsnut 216 an der Lauffläche 214 des Umlaufrings 218 angeordnet ist.

Alternativ dazu ist es auch möglich, dass die einzelnen drehbaren Übertragungselemente bzw. Drehkörper 11 als Magnetfeld¬konzentratoren jeweils mit einem Kontaktring 209c versehen sind, wobei ein Kontaktring 209c sich dann rings um einen Drehkörper 11 erstreckt. Auch bei einer solchen Ausgestaltung wird gewährleistet, dass die Drehkörper 11 bzw. deren Kontaktring 209 jeweils Kontakt zu der Welle 212 bzw. dem Aufnahmegehäuse 211 haben, sodass für eine fortlaufende Drehung der Drehkörper gesorgt wird, wenn die Dreheinheit 202 gedreht wird.

Eine Ausgestaltung ohne den Einsatz von (flexiblen) Kontaktelementen oder Kontaktringen ermöglicht eine noch geringere Grundreibung und ist deshalb besonders bevorzugt.

Hier im Ausführungsbeispiel wird über einen Anschlagring 233 ein definierter axialer Abstand zwischen dem Aufnahmegehäuse 211 und einer axialen Fläche des Umlaufrings 218 gewährleistet. Der Innenraum 213 wird über eine Dichtung 46 abgedichtet, sodass das magnetorheologische Medium nicht aus dem Innenraum 213 entweichen kann.

Zwischen dem Deckel bzw. dem Halter zu 232 und dem Aufnahmegehäuse 211 ist ein umlaufender Spalt vorgesehen, an dem ein Winkelsensor 206 angeordnet ist. Vorzugsweise besteht der Winkelsensor 206 aus wenigstens zwei Teilen 207 und 208, wobei das Sensorteil 207 beispielsweise an bestimmten Winkelpositionen Magnete oder andere Positionsmarken oder dergleichen aufweist, sodass über das z. B. auf der Elektronik montierte Sensorteil 208 an dem Aufnahmegehäuse 211 eine Drehbewegung der Dreheinheit 202 detektierbar ist. Dabei kann sowohl eine absolute Winkelposition als auch eine relative Winkelveränderung erfassbar sein. Mit dem Winkelsensor 206 oder mit einem separaten Betätigungssensor 204 kann eine Axialbewegung bzw. Axialkraft auf die Dreheinheit 202 oder Bedieneinrichtung 200 insgesamt erfasst werden. Beispielsweise kann durch Ausüben einer Axialkraft eine geringe Abstandsänderung zwischen dem Halter 32 und dem Aufnahmegehäuse 211 erreicht werden, die durch den Betätigungssensor 204 erfassbar ist. Möglich ist es auch, dass gewisse Teile oder der äußere Drehring der Dreheinheit 202 gegen eine Federkraft axial verschiebbar sind, sodass eine axiale Betätigung der Bedieneinrichtung 200 erfassbar ist. Die Elektronik vom haptischen Bedienelement arbeitet vorzugsweise mit einem Regeltakt von 4kHz oder mehr

Über eine Kabelzuführung und einen zentralen Kanal kann die hier zusammen mit der Dreheinheit 202 drehbare Anzeigeeinheit mit den nötigen Daten und dem benötigten elektrischen Strom versorgt werden.

Die Dreheinheit 202 bildet hier den äußeren Teil der Krone 301.

Figur 2 zeigt ein vergrößertes Detail aus Figur 1, wobei der Drehkörper 11 (in allen Ausgestaltungen können die Drehkörper 11 auch als drehbare Übertragungselemente oder als Magnetfeld¬ konzentratoren bezeichnet werden) und die elektrische Spule 26 und auch ein Permanentmagnet 25 sichtbar sind. Deutlich erkennbar ist hier der axiale Abstand 223 zwischen der Stirnfläche 220 an der Welle 212 und der Stirnfläche 221 an dem Aufnahmegehäuse 211. Dieser axiale Abstand 223 ist erheblich geringer als der radiale Abstand 224 zwischen dem Umlaufring 218 und der Lauffläche 215 in dem Aufnahmegehäuse 211.

Ein geringer Abstand 223 ist vorteilhaft, da das Magnetfeld 8 (vergleiche Figur 1) in axialer Richtung durch den Spalt 222 durchtritt. Bei einem dünnen Spalt sind relativ geringe magnetische Verluste möglich.

Möglich ist es auch, dass die Welle 212 in das Innere des Minicomputers 300 eingeführt wird und dort der Drehwiderstand dynamisch erzeugt wird. Es kann auch auf den Einsatz von MRF verzichtet werden und die hier relativ geringen benötigten Drehwiderstände können direkt über Magnetkräfte oder dergleichen erzeugt werden.

Mit Bezug auf die Figur 3 wird im Folgenden das Funktionsprinzip zur Erzeugung von Momenten bei der haptischen Bedieneinrichtung 200 gemäß Fig. 1 beschrieben.

Figur 3 zeigt eine stark schematische Querschnittsansicht einer erfindungsgemäßen magnetorheologischen Übertragungsvorrichtung 1 zur Beeinflussung der Kraftübertragung zwischen zwei Komponenten 2 und 3. Dabei ist zwischen den zwei Komponenten 2 und 3 in Fig. 1 ein Drehkörper 11 als separates Teil 4 vorgesehen. Der Drehkörper 11 ist hier als Kugel 14 ausgebildet. Möglich ist es aber ebenso, Drehkörper 11 als Zylinder oder Ellipsoide, Rollen oder sonstige rotierbare Drehkörper auszubilden. Auch im eigentlichen Sinn nicht rotationssymmetrische Drehkörper wie beispielsweise ein Zahnrad oder Drehkörper 11 mit einer bestimmten Oberflächenstruktur können als Drehkörper verwendet werden. Die Drehkörper 11 werden nicht zur Lagerung gegenüber einander eingesetzt, sondern zur Übertragung von Drehmoment.

Zwischen den Komponenten 2 und 3 der magnetorheologischen Übertragungsvorrichtung 1 ist ein Kanal 5 vorgesehen, der hier mit einem Medium 6 gefüllt ist. Das Medium ist hier ein magnetorheologisches Fluid 20, welches beispielsweise als Trägerflüssigkeit ein Öl umfasst, in dem ferromagnetische Partikel 19 vorhanden sind. Glykol, Fett, dickflüssige Stoffe können auch als Trägermedium verwendet werden, ohne darauf beschränkt zu sein. Das Trägermedium kann auch gasförmig sein bzw. es kann auf das Trägermedium verzichtet werden (Vakuum). In diesem Fall werden lediglich durch das Magnetfeld beeinflussbare Partikel in den Kanal gefüllt.

Die ferromagnetischen Partikel 19 sind vorzugsweise Carbonyleisenpulver, wobei die Größenverteilung der Partikel vom konkreten Einsatzfall abhängt. Konkret bevorzugt ist eine Verteilung Partikelgröße zwischen ein und zehn Mikrometern, wobei aber auch größere Partikel von zwanzig, dreißig, vierzig und fünfzig Mikrometer möglich sind. Je nach Anwendungsfall kann die Partikelgröße aus deutlich größer werden und sogar in den Millimeterbereich vordringen (Partikelkugeln). Die Partikel können auch eine spezielle Beschichtung/Mantel (Titanbeschichtung, Keramik-, Karbonmantel etc.) aufweisen, damit sie die je nach Anwendungsfall auftretenden hohen Druckbelastungen besser aushalten. Die MR-Partikel können für diesen Anwendungsfall nicht nur aus Carbonyleisenpulver (Reineisen), sondern z. B. auch aus speziellem Eisen (härterem Stahl) hergestellt werden.

Der Drehkörper 11 wird durch die Relativbewegung 17 der beiden Komponenten 2 und 3 in Rotation um seine Drehachse 12 versetzt und läuft praktisch auf der Oberfläche der Komponente 3 ab. Gleichzeitig läuft der Drehkörper 11 auf der Oberfläche der anderen Komponente 2, sodass dort eine Relativgeschwindigkeit 18 vorliegt.

Genau genommen hat der Drehkörper 11 keinen direkten Kontakt zur Oberfläche der Komponente 2 und/oder 3 und wälzt sich deshalb nicht direkt darauf ab. Der freie Abstand 9 von dem Drehkörper 11 zu einer der Oberflächen der Komponente 2 oder 3 beträgt z. B. 140 µm. In einer konkreten Ausgestaltung mit Partikelgrößen zwischen 1 µm und 10 µm liegt der freie Abstand insbesondere zwischen 75 µm und 300 µm und besonders bevorzugt zwischen 100 µm und 200 µm.

Der freie Abstand 9 beträgt insbesondere wenigstens das zehnfache des Durchmessers eines typischen mittleren Partikeldurchmessers. Vorzugsweise beträgt der freie Abstand 9 wenigstens das zehnfache eines größten typischen Partikels. Durch den fehlenden direkten Kontakt ergibt sich eine sehr geringe(s) Grundreibung/-kraft/-moment beim relativen Bewegen der Komponenten 2 und 3 zu einander.

Wird die magnetorheologische Übertragungsvorrichtung 1 mit einem Magnetfeld beaufschlagt, bilden sich die Feldlinien abhängig vom Abstand zwischen den Drehkörpern 11 und den Komponenten 2, 3 aus. Der Drehkörper besteht aus einem ferromagnetischen Material und z. B. hier aus ST 37. Der Stahltyp ST 37 hat eine magnetische Permeabilität µr von etwa 2000. Die Feldlinien treten durch den Drehkörper hindurch und konzentrieren sich in dem Drehkörper. An der hier radialen Ein- und Austrittsfläche der Feldlinien an dem Drehkörper herrscht eine hohe Flußdichte in dem Kanal 5. Das dort inhomogene und starke Feld führt zu einer lokalen und starken Vernetzung der magnetisch polarisierbaren Partikel 19. Durch die Drehbewegung des Drehkörpers 11 in Richtung auf den sich bildenden Keil in dem magnetorheologischen Fluid wird die Wirkung stark erhöht und das mögliche Brems- oder Kupplungsmoment wird extrem vergrößert weit über den Betrag hinaus, der normalerweise in dem magnetorheologischen Fluid erzeugbar ist. Vorzugsweise bestehen Drehkörper 11 und Komponente 2, 3 zumindest teilweise aus ferromagnetischem Material, weshalb die magnetische Flussdichte umso höher wird, je kleiner der Abstand zwischen Drehkörper 11 und Komponente 2, 3 ist. Dadurch bildet sich ein im Wesentlichen keilförmiger Bereich 16 im Medium aus, in welchem der Gradient des Magnetfelds zum spitzen Winkel bei der Kontaktstelle/ dem Bereich des geringsten Abstands hin stark zunimmt.

Trotz Abstand zwischen Drehkörper 11 und Komponente 2, 3 kann durch die Relativgeschwindigkeit der Oberflächen zueinander der Drehkörper 11 in eine Drehbewegung versetzt werden. Die Drehbewegung ist ohne und auch mit einem wirkenden Magnetfeld 8 möglich.

Wenn die magnetorheologische Übertragungsvorrichtung 1 einem Magnetfeld 8 einer hier in Figur 1 nicht dargestellten Magnetfelderzeugungseinrichtung 7 ausgesetzt ist, verketten sich die einzelnen Partikeln 19 des magnetorheologischen Fluides 20 entlang der Feldlinien des Magnetfeldes 8. Zu beachten ist, dass die in Figur 1 eingezeichneten Vektoren den für die Beeinflussung des MRF 20 relevanten Bereich der Feldlinien nur grob schematisch darstellen. Die Feldlinien treten im Wesentlichen normal auf die Oberflächen der ferromagnetischen Bauteile in den Kanal 5 ein und müssen vor allem im spitzwinkligen Bereich 10 nicht geradlinig verlaufen.

Gleichzeitig wird auf dem Umfang des Drehkörpers 11 etwas Material von dem magnetorheologischen Fluid 20 mit in Rotation versetzt, sodass sich ein spitzwinkliger Bereich 10 zwischen der Komponente 3 und dem Drehkörper 11 ausbildet. Auf der anderen Seite entsteht ein gleicher spitzwinkliger Bereich 10 zwischen dem Drehkörper 11 und der Komponente 2. Die spitzwinkligen Bereiche 10 können beispielsweise bei zylinderförmig ausgestalteten Drehkörpern 11 eine Keilform 16 aufweisen. Durch die Keilform 16 bedingt wird die weitere Rotation des Drehkörpers 11 behindert, sodass die Wirkung des Magnetfeldes auf das magnetorheologische Fluid verstärkt wird, da sich durch das wirkende Magnetfeld innerhalb des spitzwinkligen Bereiches 10 ein stärkerer Zusammenhalt des dortigen Mediums 6 ergibt. Dadurch wird die Wirkung des magnetorheologischen Fluids im angesammelten Haufen verstärkt (die Kettenbildung im Fluid und damit der Zusammenhalt bzw. die Viskosität), was die weitere Rotation bzw. Bewegung des Drehkörpers 11 erschwert.

Durch die Keilform 16 können wesentlich größere Kräfte oder Momente übertragen werden als es mit einem vergleichbaren Aufbau möglich wäre, der nur die Scherbewegung ohne Keileffekt nützt.

Die direkt durch das angelegte Magnetfeld übertragbaren Kräfte stellen nur einen kleinen Teil der durch die Vorrichtung übertragbaren Kräfte dar. Durch das Magnetfeld lässt sich die Keilbildung und somit die mechanische Kraftverstärkung steuern. Die mechanische Verstärkung des magnetorheologischen Effekts kann soweit gehen, dass eine Kraftübertragung auch nach Abschalten eines angelegten Magnetfeldes möglich ist, wenn die Partikel verkeilt wurden.

Es hat sich herausgestellt, dass durch die Keilwirkung der spitzwinkligen Bereiche 10 eine erheblich größere Wirkung eines Magnetfeldes 8 einer bestimmten Stärke erzielt wird. Dabei kann die Wirkung um ein Vielfaches verstärkt werden. In einem konkreten Fall wurde eine etwa zehnmal so starke Beeinflussung der Relativgeschwindigkeit zweier Komponenten 2 und 3 zueinander wie beim Stand der Technik bei MRF Kupplungen beobachtet. Die mögliche Verstärkung hängt von unterschiedlichen Faktoren ab. Gegebenenfalls kann sie durch eine größere Oberflächenrauhigkeit der Drehkörper 11 noch verstärkt werden. Möglich ist es auch, dass auf der Außenoberfläche der Drehkörper 11 nach außen ragende Vorsprünge vorgesehen sind, die zu einer noch stärkeren Keilbildung führen können.

Die Keilwirkung bzw. der Keileffekt verteilt sich flächig auf den Drehkörper 11 und die Komponenten 2 oder 3.

Figur 4 zeigt eine schematische Darstellung eines Minicomputers 300, der hier als Smartwatch ausgeführt ist. Das Gehäuse der Smartwatch kann als Grundkörper dienen. Es ist wenigstens eine haptische Bedieneinrichtung 200 vorgesehen. Hier ist eine Krone 301 zu sehen. Weiterhin ist eine Dreheinheit 202 vorgesehen, die an dem Gehäuse 201 angebracht sind. Bei dem Minicomputer 300 gemäß der Figuren 4 und 5 ist hier eine magnetorheologische Übertragungsvorrichtung 1 vorgesehen, um die benötigten magnetischen Kräfte und die entsprechend wirkenden Bremskräfte/-momente zu erzeugen.

Im Inneren des Minicomputers ist schematisch ein Prozessor 302 eingezeichnet. Teil des Prozessors 302 kann eine Steuereinrichtung 27 sein. Möglich ist es auch, dass der Krone 301 bzw. der Dreheinheit 202 eine separate Steuereinrichtung 27 zugeordnet ist, um z. B. den Prozessor zu entlasten. Dann kann der Prozessors 302 mehr Zeitanteile im Standby verbringen, wodurch Energie gespart werden kann.

Weiterhin ist eine Kommunikationseinheit 304 zu sehen, die insbesondere drahtlos eine Netzwerkverbindung oder eine sonstige Datenverbindung zu anderen Computern oder Geräten aufbauen kann.

Figur 6 zeigt eine Variante des Ausführungsbeispiels gemäß Figur 4, wobei der Deckel mit der Anzeigeeinheit 203 abklappbar ausgeführt ist, sodass nach dem Aufklappen ein Fingerprintsensor 236 oder Touchpad oder dergleichen zur Verfügung steht, um beispielsweise eine Authentifizierung eines Benutzers durchzuführen. Möglich ist es, dass eine Kamera in der Anzeigeeinheit integriert ist, die über ein Foto eine Identifikation des Gesichts oder einer Fingerkuppe des Benutzers erlaubt.

Figur 7 zeigt eine erfindungsgemäße Smartwatch als Minicomputer 300 in einer schematischen Draufsicht. Auch dieser Minicomputer 300 kann über zwei Dreheinheiten 202, 301 verfügen. Es ist aber auch möglich, dass nur eine Dreheinheit 202 oder 301 vorgesehen ist. Auf der Anzeigeeinheit 203 sind verschiedene Symbole 205 zu erkennen. Die Anzeigeeinheit 203 ist insbesondere auch berührungsempfindlich.

Die Dreheinheit 202 oder die Krone 301 sind jeweils Teil einer haptischer Bedieneinrichtung.

Die jeweils aktuelle Winkelposition der Dreheinheit 202 kann über einen Drehgeber erfasst werden. Dadurch können abhängig von der Ansteuerung je nach Position, Drehwinkel, Winkelgeschwindigkeit etc. beliebige haptische Signale ausgegeben werden. Der Drehgeber kann auch um einen Drehmomentsensor ergänzt werden.

Derartige haptische Bedieneinrichtungen können auch mit einem (zusätzlichen) MRF Schermodus hergestellt werden.

Die haptische Bedieneinrichtung 200 benötigt wenig Platz und eignet sich wegen des geringen Platzbedarfs und des geringen Stromverbrauchs im Bereich von Milliwatt oder darunter für Minicomputer 300. Das Raster der haptischen Bedieneinrichtung 200 ist situationsabhängig einstellbar.

Dreidimensionale Bewegungselemente mit variabler Haptik und robuster und präziser Lagerung sind grundsätzlich schwierig herzustellen und somit nicht preisgünstig. Die Kombination z. B. einer pendelfähigen Anordnung der Drehkörper mit einer magnetorheologischen Flüssigkeit ist hingegen sehr kostengünstig herstellbar.

Auch ein vierdimensionaler Drehknopf, der z. B. in drei Richtungen verschoben und zusätzlich noch gedreht werden kann, kann zur Verfügung gestellt werden.

Die Kombination eines 3D-Knopfes mit einer Längsverstellung eines MRF-Keils ergibt so ein 4D Betätigungselement. Mit einer Felderzeugungseinheit können alle vier Bewegungsrichtungen beeinflusst bzw. variiert werden.

Statt einem kinematischen und z. B. parallelogrammartigen Schwenkmechanismus kann auch ein elastisches/verformbares Element verwendet werden, welches z. B. als biegsamer und halbsteifer Arm aus gewendeltem Metallschlauch in Form eines Schwanenhalses bestehen kann. Ein Vorteil ist, dass der Benutzer nicht immer in den Bildschirm greifen muss, was die Verschmutzung reduziert. Außerdem geht die Verstellung und z. B. das Zoomen schneller: Mit einem Finger in den Bildschirm greifen und mit anderen Finger den Drehregler bewegen kann z. B. einen Zoomvorgang auslösen. Das gleiche gilt für die Lautstärke, das Groß-Kleinschreiben oder die Auswahl von Sondertasten oder einer zweiten Ebene beim Tippen.

So kann der Benutzer auch auf eine eigene Bedienleiste mit dem einen Finger drücken, um die Art der gewünschten Betätigung auszusuchen. Mit dem Drehregler führt er dann die gewünschte Aktion durch. Der Raster des Drehregler passt sich dann automatisch an, so z. B. "Ein"-"Aus" oder eine Lautstärkeregelung mit einem Raster evtl. mit einem dynamischem Anschlag. Wenn der Bildschirm während der Betätigung (Touchdisplay) gedreht wird (z. B. wie bei Mobiltelefonen oder handegehaltenen Computern - 90° von Hochformat auf Längsformat), dann passt sich der Raster automatisch an, d. h. er dreht sich mit. Wäre z. B. beim Hochkanthalten der Einstellbereich von 6:00 Uhr bis 12:00 Uhr, dann wäre dieser ohne Anpassung beim Drehen um 90° im Uhrzeigersinn von 12:00 Uhr bis 6:00 Uhr. Dies gilt auch, wenn das Display im Knopf selber eingebaut ist. Ein solches haptisches Element kann in alle oder einzelne Richtungen haptisch sein (nur drehen, drehen und drücken; Joystick etc.). Je nach gewählter Aktion verstellt sich die Haptik.

Ein Vorteil kann sich auch beim Auswählen von z. B. einer Liste wie einer Telefonbuchliste ergeben, da solche Einträge für große Finger oft zu klein zum "Zielen" sind.

Vorteile ergeben sich auch im Dunkeln oder für Leute mit Brille, welche diese gerade nicht tragen. Über den haptischen Drehregler erhält man eine Rückkopplung und der Benutzer weiß, was er macht, wenn es z. B. gerade dunkel ist.

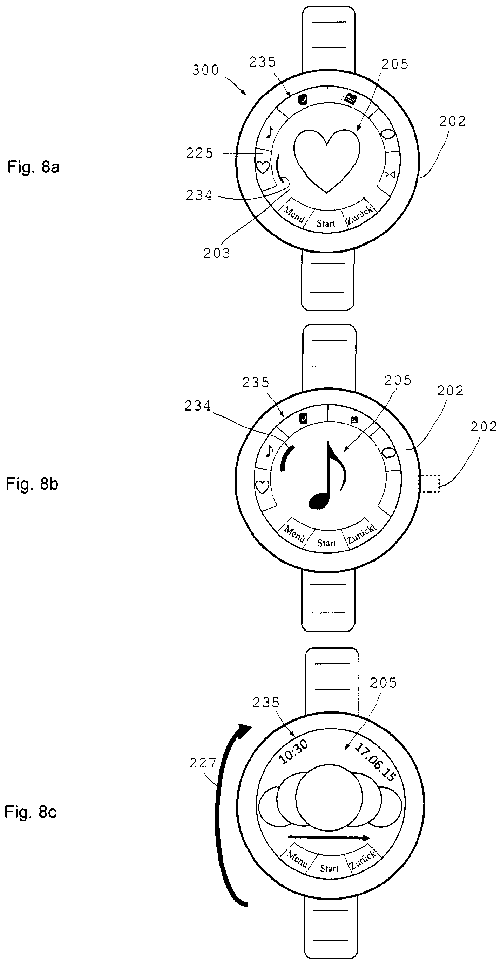

Mit Bezug auf die Figuren 8a bis 8c wird im Folgenden die Funktionsweise und die Betriebsweise eines erfindungsgemäßen Minicomputers 300 am Beispiel einer Smartwatch erläutert.

Dabei zeigt Figur 8a eine Draufsicht auf die erfindungsgemäße Smartwatch 300 mit einer haptischen Bedieneinrichtung 200. Die haptische Bedieneinrichtung 200 kann insbesondere zur Auswahl eines von Menüpunkten oder Listeneinträgen oder dergleichen dienen. Die Smartwatch verfügt hier über einen Drehring am Gehäuse, der als Dreheinheit 202 das Display 203 umgibt.

In Figur 8a ist der Betriebszustand "Pulsmessung" dargestellt. Die Anzeigeeinheit 203 zeigt zentral an der Dreheinheit 202 ein grafisches Symbol - ein Herz - mit dem Betriebszustand an. Weiter außen ist ein Menüring 235 grafisch dargestellt, an dem die einzelnen auswählbaren Menüpunkte 225 abgebildet sind. In Figur 8a sind das neun Menüpunkte, wobei der Indikator 234 neben dem gewählten Betriebszustand bzw. neben dem gerade aktiven Betriebszustand dargestellt ist.

Durch Drehen der Dreheinheit 202 in die Drehrichtung 227 (hier nach rechts bzw. im Uhrzeigersinn) kann als nächstes der Menüpunkt zur Einstellung des Audiosystems oder zur Auswahl eines Musikstückes angewählt werden.

Dieser Zustand ist in Figur 8b dargestellt, wo der Notenschlüssel als grafisches Symbol 205 im Zentrum der Anzeigeeinheit 203 abgebildet ist. Der Indikator 234 zeigt an, dass der entsprechende Menüpunkt 225 aktiv ist.

Durch Weiterdrehen der Dreheinheit 202 können schließlich die anderen Menüpunkte erreicht und aktiviert werden.

Figur 8c zeigt eine Anzahl von Listeneinträgen oder Fotos bzw.

Menüpunkten, wobei durch Drehen der Dreheinheit der Fokus auf einen der Listeneinträge oder Menüpunkte gewechselt wird. Der Pfeil zeigt die Richtung des Scrollens an.

Durch Drücken der berührungsempfindlichen Oberfläche der Anzeigeeinheit 203 kann der entsprechende Menüeintrag ausgewählt werden. Möglich ist es auch, dass durch (axiales) Drücken der Krone 301 oder durch Druck auf die Dreheinheit eine getroffene Auswahl bestätigt werden kann. Im Anschluss wird das Foto vergrößert dargestellt oder es werden die Kontaktinformationen insgesamt angezeigt etc.

Durch Betätigen der Dreheinheit 202 und Drehen im Uhrzeigersinn wird als nächster Rasterpunkt das nächste Foto erreicht etc. Dabei wird für jeden Menüeintrag ein separater Rasterpunkt vorgesehen.

Eine Drehbewegung in die entgegengesetzte Richtung, also entgegen dem Uhrzeigersinn, führt zurück zu den anderen Menüpunkten.

In allen Fällen ist es so, dass die Anzahl der Rasterpunkte für die Dreheinheit 202 an die Anzahl der verfügbaren Menüpunkte (Fotos, Kontakte etc.) angepasst wird. Das bedeutet, dass in Figur 8a neun verschiedene Rasterpunkte vorgesehen sind, während in Figur 8c die Anzahl der Rasterpunkte von der Anzahl der vorhandenen oder verfügbaren Listeneinträge abhängt. Es ist möglich, rechte und linke Endanschläge dynamisch zu erzeugen, sodass im eingeschalteten Zustand die Dreheinheit nicht beliebig weiter gedreht werden kann.

Insgesamt wird eine Smartwatch 300 zur Verfügung gestellt, bei der eine Bedienung über eine Dreheinheit 202 mit einem haptischen Raster erfolgt. Die Erzeugung der verfügbaren Rasterpunkte erfolgt dynamisch bzw. adaptiv.

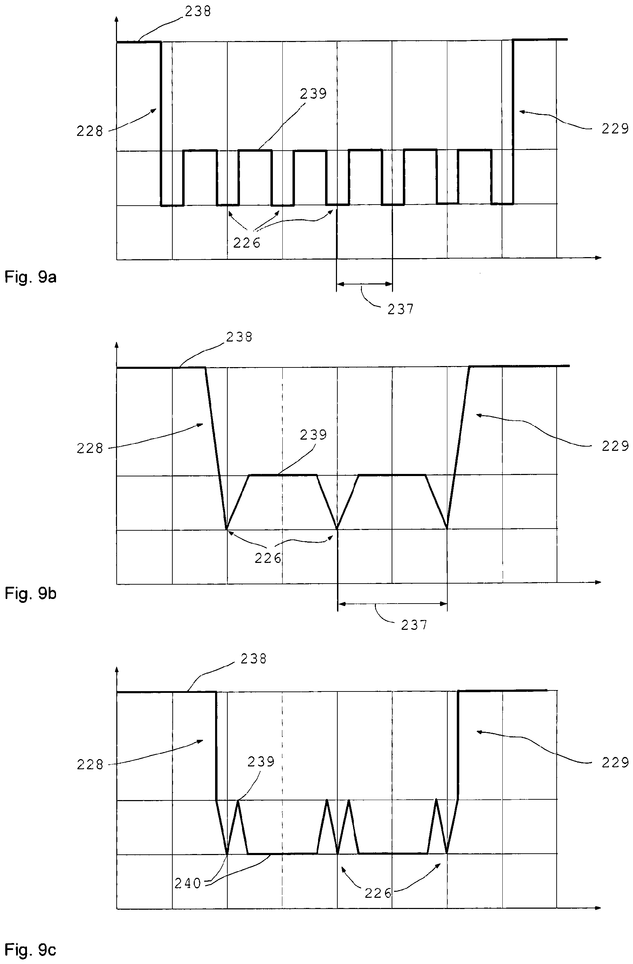

In den Figuren 9a, 9b und 9c sind mögliche Ausführungsvarianten für das dynamisch erzeugte Magnetfeld bzw. das dynamisch erzeugte Bremsmoment in Abhängigkeit von dem Drehwinkel dargestellt.

Figur 9a zeigt dabei eine Variante, bei der ein linker Endanschlag 228 und ein rechter Endanschlag 229 erzeugt werden. Bei Weiterdrehen wird dort ein hohes Magnetfeld bzw. ein hoher Drehwiderstand bzw. Anschlagmoment 238 erzeugt, wodurch die Dreheinheit 202 einen hohen Widerstand gegenüber einer Drehbewegung entgegensetzt.

Direkt neben dem linken Endanschlag 228 ist ein erster Rasterpunkt 226 vorgesehen, der einem ersten Menüpunkt 225 entspricht. Soll der nächste Menüpunkt angewählt werden, so muss die Dreheinheit 202 im Uhrzeigersinn gedreht werden. Dazu muss das dynamisch erzeugte höhere Magnetfeld bzw. Rastmoment 239 bzw. dessen Reibmoment überwunden werden, bevor der nächste Rasterpunkt 226 erreicht wird. In Figur 9a wird für einen gewissen Winkelbereich jeweils an den Rasterpunkten 226 und an den dazwischenliegenden Bereichen ein jeweils konstantes Magnetfeld erzeugt, welches an den Rasterpunkten erheblich geringer ist als in den dazwischenliegenden Bereichen und nochmals deutlich geringer als an den Anschlägen 228, 229.

Ein Winkelabstand 237 zwischen einzelnen Rasterpunkten ist dynamisch veränderbar und wird an die Anzahl der zur Verfügung stehenden Rasterpunkte bzw. Menüpunkte angepasst.

Figur 9b zeigt eine Variante, bei der zu den Endanschlägen 228, 229 hin das Magnetfeld nicht schlagartig ansteigt, sondern einen steilen Verlauf nimmt. Weiterhin sind an den Rasterpunkten 226 zu beiden Drehseiten hin jeweils rampenartige Steigungen des Magnetfeldes vorgesehen, wodurch der Drehwiderstand in die entsprechenden Drehrichtungen hin zunimmt. Hier werden mit der gleichen Bedieneinrichtung 200 nur drei Rasterpunkte 226 zur Verfügung gestellt, deren Winkelabstand 237 größer ist als in dem Beispiel gemäß Figur 9a.

Figur 9c zeigt eine Variante, bei der zwischen einzelnen Rasterpunkten 226 ein geringerer Drehwiderstand vorliegt und nur direkt benachbart zu den Rasterpunkten 226 jeweils ein erhöhtes Magnetfeld 239 erzeugt wird, um ein Einrasten an den einzelnen Rasterpunkten 226 zu ermöglichen und gleichzeitig nur einen geringen Drehwiderstand zwischen einzelnen Rasterpunkten zur Verfügung zu stellen.

Grundsätzlich ist auch eine Mischung der Betriebsweisen und der Magnetfeldverläufe der Figuren 9a, 9b und 9c möglich. Beispielsweise kann bei unterschiedlichen Untermenüs eine entsprechend unterschiedliche Einstellung des Magnetfeldverlaufes erfolgen.

Wenn der Knopf nicht gedreht wird, d. h. der Winkel konstant ist, wird vorzugsweise kontinuierlich über der Zeit der Strom verringert.

Der Strom kann auch geschwindigkeitsabhängig sein und/oder von der Drehwinkelgeschwindigkeit des haptischen Knopfes abhängen.

In allen Ausgestaltungen ist eine Bewegungsmustererkennung möglich. Bewegt oder dreht der Benutzer den Bedienknopf nach einem (vorbestimmten) Muster, so wird das erkannt. Beispielsweise kann der Benutzer z. B. zweimal links und zweimal rechts mit relativ (ganz wenig) Winkel drehen. Der Sensor (Drehgeber) und die Elektronik erkennen dieses Bewegungsmuster und schalten davon abhängig eine hinterlegte Funktion, z. B. wird das gewählte (oder ein vordefiniertes) Menü danach ausgeführt (bestätigt). Weiteres Beispiel: Zweimal kurz im Uhrzeigersinn kann aber auch bedeuten, dass das Menü um zwei Menüpunkte nach unten gehen soll. Das Bewegungsmuster kann beliebig vorgegeben sein oder vom Nutzer angelegt werden. Der Bedienknopf kann dies auch erlernen. Die auszuführenden Funktionen können auch vorgegeben oder vom Nutzer zugeordnet werden. Es sind viele Bewegungsmuster möglich.

Insgesamt stellt die Erfindung einen vorteilhaften Minicomputer 300 mit einer haptischen Bedieneinrichtung 200 und ein entsprechend vorteilhaftes Verfahren zur Steuerung zur Verfügung. Die Anzahl und Art der Rasterpunkte wird dynamisch an die Anzahl der zur Verfügung stehenden Menüpunkte angepasst. Die Bedieneinrichtung 200 des Minicomputers in Fig. 1 wurde getestet und hat ein gemessenes Grundmoment von ca. 0,015 Nm und ein Maximalmoment von >5 Nm (Faktor 300) .

In allen Fällen kann z. B. über eine Pulsweitenmodulation (PWM) das wirksame Moment drehzahlabhängig eingestellt werden. Große axiale und radiale Kräfte können über einen schrägen Spreizdorn erzeugt werden. Die Partikel können eine runde, stäbchenförmige oder jede andere Form haben.

Die rheologische Flüssigkeit kann aus verschiedensten Bestandteilen bestehen, welche einzeln oder in Kombination sein können: Fe, Kohlenstoffstahl, NdFeB (Neodymium), Alnico, Samarium, Cobalt, Silizium, Kohlefaser, rostfreier Stahl, Polymere, Soda-lime glass, Kalknatronglas, Keramic und nicht magnetische Metalle und dergleichen mehr. Dimorphische magnetorheologische Flüssigkeiten mit Nanotubes oder/und Nanowires sind auch möglich.

Die Trägerflüssigkeit kann insbesondere aus den folgenden Bestandteilen oder einer Kombination daraus bestehen: Öle und vorzugsweise synthetische oder nicht synthetische Öle, Hydrauliköl, Glycol, Wasser, Fette und dergleichen mehr.

**Bezugszeichenliste:**

| | | | |
|---|---|---|---|
| 1 | Einrichtung | 210 | Grundplatte |
| 2, 3 | Komponente | 211 | Aufnahmegehäuse |
| 4 | separates Teil | 212 | Welle |
| 5 | Kanal | 213 | Innenraum |
| 6 | Medium | 214 | Lauffläche von 212 |
| 7 | Magnetfelderzeugungseinrichtung | 215 | Lauffläche von 211 |
| | | 216 | Nut |
| 8 | Feld | 217 | Nut |
| 9 | freier Abstand | 218 | Umlaufring mit 214 und 216 |
| 10 | spitzwinkliger Bereich | 219 | Aufnahmeraum für 26 |
| 11 | Drehkörper | 220 | Stirnfläche von 218 |
| 12 | Drehachse | 221 | Stirnfläche von 211 |
| 13 | Drehkörper | 222 | Spalt |
| 14 | Kugel | 223 | axialer Abstand |
| 15 | Zylinder | 224 | radialer Abstand |
| 16 | Keilform | 225 | Menüpunkt |
| 17 | Richtung der Relativbewegung | 226 | Rasterpunkt |
| | | 227 | Drehrichtung |
| 18 | Richtung der Relativbewegung | 228 | Endanschlag |
| | | 229 | Endanschlag |
| 19 | magnetische Partikel | 230 | Deckel |
| 20 | Fluid | 231 | Schraube |
| 25 | Dauermagnet | 232 | Halter |
| 26 | Spule | 233 | Anschlagring |
| 27 | Steuereinrichtung | 234 | Indikator |
| 28 | Energiespeicher | 235 | Menüring |
| 29 | Sensor | 236 | Fingerprintsensor |
| 30 | Lager | 237 | Winkelabstand |
| 46 | Dichtring | 238 | Anschlagmoment |
| 47 | Welle | 239 | Rastermoment |
| 200 | Bedieneinrichtung | 240 | Grundmoment |
| 201 | Grundkörper | 242 | äußerer Schenkel |
| 202 | Dreheinheit | 243 | radial innerer Bereich |
| 203 | Anzeigeeinheit | 244 | innerer Schenkel |
| 204 | Betätigungssensor | 300 | Minicomputer, Smartwatch |
| 205 | grafisches Symbol | 301 | Krone |
| 206 | Winkelsensor | 302 | Prozessor |
| 207 | Sensorteil | 303 | Anzeigeeinheit, Display |
| 208 | Sensorteil | 304 | Kommunikationseinheit |
| 209 | Kontaktring, Reibring | | |

## Patentansprüche

1. Minicomputer (300), insbesondere Smartwatch oder Smart Device, mit einem Prozessor (302) und einer Anzeigeeinheit (303) und einer Kommunikationseinheit (304) und mit einer haptischen Bedieneinrichtung (200), wobei die haptische Bedieneinrichtung (200) eine drehbare Dreheinheit (202) und eine steuerbare Übertragungsvorrichtung (1) aufweist, sodass der Drehwiderstand beim Drehen der Dreheinheit (202, 301) dynamisch veränderbar ist, wobei die Übertragungsvorrichtung (1) wenigstens zwei koppelbare Komponenten (2, 3) aufweist, deren Kopplungsintensität beeinflussbar ist, wobei zur Beeinflussung der Kopplungsintensität zwischen den koppelbaren Komponenten (2, 3) in einem Kanal (5) ein durch ein Magnetfeld (8) beeinflussbares magnetorheologisches Medium (6) mit magnetisch polarisierbaren Partikeln (19) angeordnet ist, und wobei wenigstens eine Magnetfelderzeugungseinrichtung (7) zur Erzeugung wenigstens eines Magnetfeldes (8) vorgesehen ist, um mit dem Magnetfeld (8) das magnetorheologische Medium (6) zu beeinflussen, wobei ein Grundkörper (201) mit einer der beiden Komponenten (2, 3) und die Dreheinheit (202, 301) mit der anderen der beiden Komponenten (3, 2) gekoppelt ist, wobei in dem Kanal (5) wenigstens ein drehbares Übertragungselement (11) als Magnetfeldkonzentrator angeordnet ist, wobei das drehbare Übertragungselement bei einer Drehbewegung wenigstens einer der koppelbaren Komponenten (2, 3) in Drehung versetzt wird,
**dadurch gekennzeichnet,**
**dass** der Grundkörper (201) eine Grundplatte (210) und ein Aufnahmegehäuse (211) umfasst und wobei an dem Aufnahmegehäuse (211) eine Welle (212) drehbar aufgenommen ist und wobei das magnetorheologische Medium (6) zwischen dem Grundkörper (201) und der Welle (212) aufgenommen ist,
und **dass** sich in einem radial inneren Bereich an das Aufnahmegehäuse (211) und durch einen axialen Spalt (222) davon getrennt ein mit der Welle (212) drehfest verbundener Umlaufring (218) anschließt, und dass das Aufnahmegehäuse (211) und der Umlaufring (218) aus einem besser magnetisch leitenden Material bestehen als die Grundplatte (210).

2. Minicomputer (300) nach Anspruch 1, wobei eine Steuereinrichtung (27) umfasst ist, wobei die dazu eingerichtet ist, ein haptisches Raster bei einer Drehung der Dreheinheit (202, 301) dynamisch zu erzeugen.

3. Minicomputer (300) nach mindestens einem der vorhergehenden Ansprüche, wobei die Dreheinheit (202, 301) gegenüber der Anzeigeeinheit (203) drehbar ist und wobei die Anzeigeeinheit (203) drehfest mit dem Grundkörper (201) verbunden ist.

4. Minicomputer (300) nach mindestens einem der vorhergehenden Ansprüche, wobei ein Sensor (206) vorgesehen ist, mit dem eine Winkelveränderung und insbesondere eine absolute Winkelposition zwischen der Dreheinheit (202, 301) und dem Grundkörper (201) erfassbar ist.

5. Minicomputer (300) nach Anspruch 2 oder nach Anspruch 2 und Anspruch 3 oder Anspruch 4, wobei die Steuereinrichtung (27) dazu geeignet und ausgebildet ist, die Magnetfelderzeugungseinrichtung (7) dynamisch zu steuern und das Magnetfeld der Magnetfelderzeugungseinrichtung (7) dynamisch in Abhängigkeit von einem Drehwinkel zu erzeugen, um ein dynamisches und winkelabhängiges haptisches Raster zur Verfügung zu stellen.

6. Minicomputer (300) nach mindestens einem der vorhergehenden Ansprüche, wobei wenigstens ein separater Kontaktring (209) zwischen den beiden Komponenten (2,3) angeordnet ist, wobei der Kontaktring (209) elastisch ausgebildet ist.

7. Minicomputer (300) nach mindestens einem der vorhergehenden Ansprüche, wobei zwischen den beiden Komponenten (2, 3) der Kanal (5) ausgebildet ist und wobei in dem Kanal (5) wenigstens eine Mehrzahl an als Drehkörper (11) ausgebildeten drehbaren Übertragungselementen vorgesehen ist.

8. Minicomputer (300) nach Anspruch 7, wobei die Dreheinheit (202, 301) mit der Welle (212) drehfest verbunden ist und wobei die Welle (212) an einem Ende an der Grundplatte (210) drehbar abgestützt ist und wobei der Grundkörper (201) und die Welle (212) benachbart zu der Grundplatte (210) jeweils eine umlaufende Lauffläche (214, 215) für die Drehkörper (11) aufweisen und wobei wenigstens eine Lauffläche (214, 215) wenigstens eine umlaufende Nut (216, 217) für die Drehkörper (11) aufweist und wobei die Lauffläche (214) der Welle (212) an dem Umlaufring (218) mit vergrößertem Durchmesser ausgebildet ist und wobei der Umlaufring (218) an einer Stirnfläche (220) durch den Spalt (222) von einer Stirnfläche (221) des Aufnahmegehäuses (211) getrennt ist, wobei in dem Spalt (222) ein freier axialer Abstand (223) erheblich geringer ist als ein freier radialer Abstand (224) an dem Kanal (5) zwischen dem Umlaufring (218) und einer Lauffläche (215) in dem Aufnahmegehäuse (211).

9. Minicomputer (300) nach mindestens einem der vorhergehenden Ansprüche, wobei in dem Aufnahmegehäuse (211) ein Aufnahmeraum (219) ausgebildet ist, in dem eine elektrische Spule (26) angeordnet ist und wobei die elektrische Spule (26) im Wesentlichen axial benachbart zu den Drehkörpern (11) angeordnet ist.

10. Minicomputer (300) nach mindestens einem der vorhergehenden Ansprüche, wobei ein freier Abstand (9) zwischen dem drehbaren Übertragungselement und der Komponente (2, 3) wenigstens doppelt so groß ist wie ein typischer mittlerer Durchmesser der magnetisch polarisierbaren Partikel (19) in dem magnetorheologischen Medium (6), und dass zwischen dem drehbaren Übertragungselement (11) und wenigstens einer Komponente (2, 3) wenigstens ein und das magnetorheologische Medium (6) enthaltender Bereich (10) vorgesehen ist, der mit dem Magnetfeld (8) der Magnetfelderzeugungseinrichtung (7) beaufschlagbar ist, um die Partikel (19) wahlweise zu verketten und/oder mit dem Drehkörper (11) zu verkeilen oder freizugeben und wobei insbesondere der Bereich (10) zwischen dem drehbaren Übertragungselement (11) und einer Komponente (2, 3) sich in Richtung der Relativbewegung (17, 18) der Komponente (2,3) relativ zu dem drehbaren Übertragungselement (11) verjüngt.

11. Verfahren zum Bedienen eines Minicomputers (300), insbesondere einer Smartwatch, nach einem der vorhergehenden Ansprüche, wobei
die haptische Bedieneinrichtung (200) mit der Dreheinheit (202, 301) verwendet wird und auf der Anzeigeeinheit (203) auswählbare Menüpunkte (225) angezeigt werden und wobei durch Drehen der Dreheinheit (202) ein Menüpunkt (225) selektiert wird,
**dadurch gekennzeichnet,**
**dass** während einer Drehung der Dreheinheit (202, 301) ein Drehwiderstand dynamisch verändert wird.

12. Verfahren nach dem vorhergehenden Anspruch, wobei während einer Drehung der Dreheinheit (202, 301) ein haptisches Raster mit Rasterpunkten dynamisch erzeugt wird und wobei die Dreheinheit (202) beim Drehen an einer Anzahl von haptisch fühlbaren Rasterpunkten (226) rastet und wobei insbesondere die Anzahl der haptisch fühlbaren Rasterpunkte (226) dynamisch verändert wird und/oder wobei die Rasterpunkte (226) durch gezieltes Erzeugen eines Magnetfeldes (8) an einem wenigstens teilweise mit einem magnetorheologischen Medium (6) gefüllten Kanal (5) erzeugt werden.

13. Verfahren nach dem vorhergehenden Anspruch, wobei eine Winkelstellung (227) der Dreheinheit (202) detektiert wird und wobei in Abhängigkeit von der detektierten Winkelstellung (227) der Drehwiderstand eingestellt wird
und/oder wobei in wenigstens eine Drehrichtung (227) ein Endanschlag (228, 229) dynamisch erzeugt wird, wobei an dem Endanschlag (228, 229) der Drehwiderstand erheblich stärker eingestellt wird als an einem Rasterpunkt (226),
und/oder wobei ein Rasterpunkt (226) an einer bestimmten Winkelposition dadurch erzeugt wird, dass an Winkelstellen benachbart zu der bestimmten Winkelposition ein stärkerer Drehwiderstand erzeugt wird als an der für den Rasterpunkt (226) bestimmten Winkelposition,
und/oder wobei ein Winkelabstand (237) wenigstens zweier benachbarter Rasterpunkte dynamisch eingestellt wird,
und/oder wobei die Dreheinheit (202, 301) im abgeschalten Zustand endlos und/oder frei drehbar ist.

14. Verfahren nach einem der drei vorhergehenden Ansprüche, wobei wenigstens ein Dauermagnet (25) eingesetzt wird, dessen Magnetfeld dynamisch mit einem Magnetfeld einer elektrischen Spule (26) überlagerbar ist.

15. Verfahren nach einem der vier vorhergehenden Ansprüche, wobei die Anzahl der Rasterpunkte der Anzahl der aktuell verfügbaren Menüpunkte oder Listeneinträgen entspricht und/oder wobei beim Drücken der haptischen Bedieneinrichtung (200) und/oder der Dreheinheit (202, 301) ein selektierter Menüpunkt aktiviert wird und/oder wobei beim Aktivieren eines Menüpunkts ein zugehöriger Verfahrensschritt ausgeführt oder ein zugehöriges Untermenü angezeigt und die Anzahl der Rasterpunkte dynamisch an die auswählbaren Menüpunkte des Untermenüs angepasst wird.

## Claims

1. Minicomputer (300), in particular a smart watch or smart device, comprising a processor (302) and a display unit (303) and a communication unit (304) and including a haptic operating device (200), the haptic operating device (200) comprising a rotatable rotating unit (202) and a controllable transmission apparatus (1) so that the resistance to rotation is dynamically variable as the rotating unit (202, 301) rotates, the transmission apparatus (1) comprising at least two components (2, 3) provided for coupling, the coupling intensity of which can be influenced, wherein a magnetorheological medium (6) having magnetically polarizing particles (19) which can be influenced by a magnetic field (8) is disposed in a duct (5) for influencing the coupling intensity between the components (2, 3) provided for coupling, and wherein at least one magnetic field generating device (7) is provided for generating at least one magnetic field (8) so as to influence the magnetorheological medium (6) by means of the magnetic field (8), wherein a main body (201) is coupled with one of the two components (2, 3) and the rotating unit (202, 301), with the other of the two components (3, 2), wherein at least one rotatable transmission member (11) is provided in the duct (5) as a magnetic field concentrator, wherein the rotatable transmission member is caused to rotate by way of rotational movement of at least one of the components (2, 3) provided for coupling,
**characterized in**
**that** the main body (201) comprises a base plate (210) and a takeup housing (211) and wherein the takeup housing (211) rotatably accommodates a shaft (212) and wherein the magnetorheological medium (6) is accommodated between the main body (201) and the shaft (212),
and **that** in a radially inwardly region a circulating ring (218) which is non-rotatably connected with the shaft (212) and separated therefrom by an axial gap (222) follows the takeup housing (211), and that the takeup housing (211) and the circulating ring (218) are made of a material whose magnetic conductivity is better than that of the base plate (210).

2. The minicomputer (300) according to claim 1 wherein a control device (27) is comprised which is set up to dynamically generate a haptic grid as the rotating unit (202, 301) rotates.

3. The minicomputer (300) according to at least one of the preceding claims wherein the rotating unit (202, 301) is rotatable relative to the display unit (203) and wherein the display unit (203) is non-rotatably connected with the main body (201) .

4. The minicomputer (300) according to at least one of the preceding claims wherein a sensor (206) is provided for capturing angular changes and in particular absolute angular positions between the rotating unit (202, 301) and the main body (201) .

5. The minicomputer (300) according to claim 2 or according to claim 2 and claim 3 or claim 4 wherein the control device (27) is suitable and set up to dynamically control the magnetic field generating device (7) and to dynamically generate the magnetic field of the magnetic field generating device (7) in dependence on an angle of rotation so as to provide a dynamic and angle-dependent haptic grid.

6. The minicomputer (300) according to at least one of the preceding claims wherein at least one separate contact ring (209) is disposed between the two components (2, 3), the contact ring (209) being configured elastic.

7. The minicomputer (300) according to at least one of the preceding claims wherein the duct (5) is configured between the two components (2, 3) and wherein at least a plurality of rotatable transmission members configured as rotary bodies (11) is provided in the duct (5).

8. The minicomputer (300) according to claim 7 wherein the rotating unit (202, 301) is non-rotatably connected with the shaft (212) and wherein one end of the shaft (212) is rotatably supported on the base plate (210) and wherein the main body (201) and the shaft (212) comprise, adjacent to the base plate (210), one circumferential raceway (214, 215) for each of the rotary bodies (11) and wherein at least one raceway (214, 215) comprises at least one circumferential groove (216, 217) for the rotary bodies (11) and wherein the raceway (214) of the shaft (212) is configured with an enlarged diameter at the circulating ring (218) and wherein at one front surface (220) the circulating ring (218) is separated by the gap (222) from a front surface (221) of the takeup housing (211), wherein a clear axial distance (223) in the gap (222) is considerably narrower than a clear radial distance (224) at the duct (5) between the circulating ring (218) and a raceway (215) in the takeup housing (211) .

9. The minicomputer (300) according to at least one of the preceding claims wherein a takeup space (219) is configured in the takeup housing (211) in which an electric coil (26) is disposed and wherein the electric coil (26) is disposed substantially axially adjacent to the rotary bodies (11).

10. The minicomputer (300) according to at least one of the preceding claims wherein a clear distance (9) between the rotatable transmission member and the component (2, 3) is at least twice the typical mean diameter of the magnetically polarizing particles (19) in the magnetorheological medium (6), and that at least one region (10) containing the magnetorheological medium (6) is provided between the rotatable transmission member (11) and at least one component (2, 3), on which the magnetic field (8) of the magnetic field generating device (7) can be applied to selectively concatenate the particles (19) and/or to wedge them with, or release from, the rotary body (11) and wherein in particular the region (10) between the rotatable transmission member (11) and a component (2, 3) tapers in the direction of the relative motion (17, 18) of the component (2, 3) relative to the rotatable transmission member (11).

11. Method for operating a minicomputer (300), in particular a smart watch, according to any of the preceding claims wherein the haptic operating device (200) is used with the rotating unit (202, 301) and the display unit (203) shows selectable menu items (225) and wherein rotating the rotating unit (202) selects a menu item (225), **characterized in that** during rotation of the rotating unit (202, 301) a resistance to rotation is dynamically changed.

12. The method according to the preceding claim wherein during rotation of the rotating unit (202, 301) a haptic grid with grid points is dynamically generated and wherein during rotation the rotating unit (202) snaps into a number of haptically sensible grid points (226) and wherein in particular the quantity of the haptically sensible grid points (226) dynamically changes and/or wherein the grid points (226) are generated by controlled generation of a magnetic field (8) at a duct (5) that is at least partially filled with a magnetorheological medium (6).

13. The method according to the preceding claim wherein the angular position (227) of the rotating unit (202) is detected and wherein the resistance to rotation is set and adjusted in dependence on the detected angular position (227) and/or wherein at least in one rotational direction (227) a limit stop (228, 229) is dynamically generated wherein at the limit stop (228, 229) the resistance to rotation is set considerably stronger than it is at a grid point (226),
and/or wherein a grid point (226) is generated in a specific angular position by way of generating a resistance to rotation that is stronger in angular positions adjacent to the specific angular position than in the angular position provided for the grid point (226),
and/or wherein an angular distance (237) of at least two adjacent grid points is dynamically set, and/or wherein the rotating unit (202, 301) is continuous and/or freely rotatable in the switched-off state.

14. The method according to any of the three preceding claims wherein at least one permanent magnet (25) is used whose magnetic field can be dynamically superimposed by a magnetic field of an electric coil (26).

15. The method according to any of the four preceding claims wherein the quantity of the grid points corresponds to the quantity of the currently available menu items or list entries and/or wherein as the haptic operating device (200) and/or the rotating unit (202, 301) is pressed, a selected menu item is activated and/or wherein in activating a menu item a pertaining process step is carried out or a pertaining submenu is displayed and the quantity of the grid points is dynamically matched to the selectable menu items of the submenu.

## Revendications

1. Mini-ordinateur (300), en particulier montre intelligente ou dispositif intelligent, comprenant un processeur (302) et une unité d'affichage (303) et une unité de communication (304) ainsi qu'un dispositif de commande (200) haptique, dans lequel ledit dispositif de commande (200) haptique comprend une unité de rotation (202) rotative et un dispositif de transmission (1) commandable de sorte que la résistance à la rotation pendant la rotation de l'unité de rotation (202, 301) peut être modifiée de manière dynamique, dans lequel le dispositif de transmission (1) comprend au moins deux composants (2, 3) aptes à être couplés dont l'intensité de couplage peut être influencée, dans lequel un milieu magnétorhéologique (6) ayant des particules (19) polarisables de manière magnétique et apte à être influencé par un champ magnétique (8) est disposé dans un canal (5) pour influencer l'intensité de couplage entre les composants (2, 3) aptes à être couplés, et dans lequel au moins un dispositif de génération de champ magnétique (7) est prévu pour générer au moins un champ magnétique (8) afin d'influer avec le champ magnétique (8) sur le milieu magnétorhéologique (6), dans lequel un corps de base (201) est couplé à l'un des deux composants (2, 3) et l'unité de rotation (202, 301) est couplée à l'autre des deux composants (3, 2), dans lequel au moins un élément de transmission (11) rotatif est agencé en tant que concentrateur de champ magnétique dans le canal (5), dans lequel l'élément de transmission rotatif est mis en rotation lors d'un mouvement de rotation d'au moins l'un des composants (2, 3) aptes à être couplés,
**caractérisé par le fait que** le corps de base (201) comprend une plaque de base (210) et un boîtier de logement (211) et dans lequel, un arbre (212) est reçu de manière rotative sur le boîtier de logement (211), et dans lequel le milieu magnétorhéologique (6) est reçu entre le corps de base (201) et l'arbre (212), et qu'une bague périphérique (218) solidaire en rotation à l'arbre (212) est contiguë au boîtier de logement (211) dans une zone radialement intérieure tout en étant séparée de celui-ci par une fente axiale (222), et le boîtier de logement (211) et la bague périphérique (218) sont faits d'un matériau présentant une meilleure conduction magnétique que la plaque de base (210).

2. Mini-ordinateur (300) selon la revendication 1, dans lequel un dispositif de commande (27) est compris qui est adapté pour générer dynamiquement une trame haptique lors d'une rotation de l'unité de rotation (202, 301).

3. Mini-ordinateur (300) selon l'une au moins des revendications précédentes, dans lequel l'unité de rotation (202, 301) peut tourner par rapport à l'unité d'affichage (203) et dans lequel l'unité d'affichage (203) est solidaire en rotation du corps de base (201).

4. Mini-ordinateur (300) selon l'une au moins des revendications précédentes, dans lequel un capteur (206) est prévu au moyen duquel peut être détecté(e) un changement angulaire et en particulier une position angulaire absolue entre l'unité de rotation (202, 301) et le corps de base (201).

5. Mini-ordinateur (300) selon la revendication 2 ou selon la revendication 2 et la revendication 3 ou la revendication 4, dans lequel le dispositif de commande (27) est adapté et conçu pour commander dynamiquement le dispositif de génération de champ magnétique (7) et pour générer le champ magnétique du dispositif de génération de champ magnétique (7) de manière dynamique en fonction d'un angle de rotation afin de fournir une trame haptique dynamique et dépendante de l'angle.

6. Mini-ordinateur (300) selon l'une au moins des revendications précédentes, dans lequel au moins une bague de contact (209) séparée est disposée entre les deux composants (2,3), dans lequel la bague de contact (209) est formée de manière élastique.

7. Mini-ordinateur (300) selon l'une au moins des revendications précédentes, dans lequel le canal (5) est réalisé entre les deux composants (2, 3) et dans lequel au moins une pluralité d'éléments de transmission rotatifs réalisés en tant que corps rotatifs (11) est prévu dans le canal (5).

8. Mini-ordinateur (300) selon la revendication 7, dans lequel l'unité de rotation (202, 301) est solidaire en rotation de l'arbre (212) et dans lequel l'arbre (212) est supporté en rotation à une extrémité sur la plaque de base (210) et dans lequel le corps de base (201) et l'arbre (212) présentent chacun, de manière adjacente à la plaque de base (210), une surface de roulement circonférentielle (214, 215) pour les corps rotatifs (11) et dans lequel au moins une surface de roulement (214, 215) présente au moins une rainure circonférentielle (216, 217) pour les corps rotatifs (11) et dans lequel la surface de roulement (214) de l'arbre (212) est réalisée sur la bague périphérique (218) avec un diamètre agrandi et dans lequel la bague périphérique (218) est séparée sur une face frontale (220) par ladite fente (22) d'une face frontale (221) du boîtier de logement (211), dans lequel une distance axiale libre (223) dans la fente (222) est considérablement plus petite qu'une distance radiale libre (224) sur le canal (5) entre la bague périphérique (218) et une surface de roulement (215) dans le boîtier de logement (211).

9. Mini-ordinateur (300) selon l'une au moins des revendications précédentes, dans lequel dans le boîtier de logement (211) est ménagé un espace de logement (219) où est disposée une bobine électrique (26), et dans lequel la bobine électrique (26) est disposée de manière à être pour l'essentiel axialement adjacente aux corps rotatifs (11).

10. Mini-ordinateur (300) selon l'une au moins des revendications précédentes, dans lequel une distance libre (9) entre l'élément de transmission rotatif et le composant (2, 3) est au moins deux fois plus grande qu'un diamètre moyen typique des particules (19) polarisables de façon magnétique dans le milieu magnétorhéologique (6), et qu'au moins une zone (10) contenant le milieu magnétorhéologique (6) est prévue entre ledit élément de transmission rotatif (11) et au moins un composant (2, 3), qui peut être soumise au champ magnétique (8) du dispositif de génération de champ magnétique (7) pour, au choix, enchaîner les particules (19) et/ou pour les claver avec le corps de rotation (11) ou les libérer, et dans lequel, en particulier, la zone (10) située entre l'élément de transmission rotatif (11) et un composant (2, 3) se rétrécit en direction du mouvement relatif (17, 18) du composant (2, 3) par rapport à l'élément de transmission rotatif (11).

11. Procédé destiné à faire fonctionner un mini-ordinateur (300), en particulier une montre intelligente, selon l'une quelconque des revendications précédentes, dans lequel le dispositif de commande (200) haptique est utilisé avec l'unité de rotation (202, 301) et des éléments de menu (225) sélectionnables sont affichés sur l'unité d'affichage (203), et dans lequel un élément de menu (225) est sélectionné par rotation de l'unité de rotation (202), **caractérisé par le fait qu'**une résistance à la rotation est modifiée de manière dynamique lors d'une rotation de l'unité de rotation (202, 301).

12. Procédé selon la revendication précédente, dans lequel, lors d'une rotation de l'unité de rotation (202, 301), une trame haptique à points de trame est générée de façon dynamique, et dans lequel, lors de la rotation, l'unité de rotation (202) s'enclenche sur un nombre de points de trame haptiquement tactiles (226), et dans lequel, en particulier, le nombre de points de trame haptiquement tactiles (226) est modifié de manière dynamique, et/ou dans lequel les points de trame (226) sont générés en générant de manière ciblée un champ magnétique (8) sur un canal (5) rempli au moins en partie d'un milieu magnétorhéologique (6).

13. Procédé selon la revendication précédente, dans lequel une position angulaire (227) de l'unité de rotation (202) est détectée et dans lequel la résistance à la rotation est réglée en fonction de la position angulaire (227) détectée et/ou dans lequel une butée de fin de course (228, 229) est générée dynamiquement dans au moins une direction de rotation (227), dans lequel la résistance à la rotation est réglée de manière beaucoup plus forte sur la butée de fin de course (228, 229) que sur un point de trame (226), et/ou dans lequel un point de trame (226) est généré sur une position angulaire déterminée par le fait qu'une résistance à la rotation plus forte est générée sur des points angulaires adjacents à la position angulaire déterminée que sur la position angulaire déterminée pour le point de trame (226), et/ou dans lequel une distance angulaire (237) d'au moins deux points de trame adjacents est réglée de manière dynamique, et/ou dans lequel, à l'état d'arrêt, l'unité de rotation (202, 301) peut tourner sans fin et/ou librement.

14. Procédé selon l'une quelconque des trois revendications précédentes, dans lequel on utilise au moins un aimant permanent (25) au champ magnétique duquel peut être superposé de manière dynamique un champ magnétique d'une bobine électrique (26).

15. Procédé selon l'une quelconque des quatre revendications précédentes, dans lequel le nombre de points de trame correspond au nombre d'éléments de menu ou d'entrées de liste actuellement disponibles, et/ou dans lequel, lorsqu'on appuie sur le dispositif de commande (200) haptique et/ou sur l'unité de rotation (202, 301), un élément de menu sélectionné est activé, et/ou dans lequel, lors de l'activation d'un élément de menu, une étape de procédé associée est mise en oeuvre ou un sous-menu associé est affiché et le nombre des points de trame est adapté dynamiquement aux éléments de menu sélectionnables du sous-menu.
